# EUROPÄISCHE PATENTSCHRIFT

(11) **EP 2 412 954 B1**
(45) Veröffentlichungstag und Bekanntmachung des Hinweises auf die Patenterteilung: **28.11.2018**
(21) Anmeldenummer: 11002520.2
(22) Anmeldetag: 26.03.2011
(51) Int. Cl.: F02D 9/06, F02D 41/00, F02B 37/22, F01L 13/06, F02D 13/04, F02B 37/18

(54) **Verfahren zur Motorbremsung**
Method for braking a motor
Procédé de freinage moteur

(30) Priorität: 26.07.2010 AT 12462010
(43) Veröffentlichungstag der Anmeldung: 01.02.2012
(73) Patentinhaber: MAN Truck & Bus Österreich AG, 4400 Steyr (AT)
(72) Erfinder: Rammer, Franz, 4493 Wolfern (AT); Leitenmayr, Franz, 4320 Perg (AT); Raab, Gottfried, 4320 Perg (AT)
(74) Vertreter: Liebl, Thomas

(56) Entgegenhaltungen:
- EP-A2- 0 831 216
- WO-A1-2007/129970
- WO-A1-2008/118073
- DE-A1- 19 824 913
- US-A- 5 692 469
- US-A- 6 155 049
- US-A1- 2001 017 033
- US-A1- 2005 224 046

## Beschreibung

Die vorliegende Erfindung betrifft ein Verfahren und eine Vorrichtung zur Motorbremsung mit einem vorzugsweise nach dem Dieselprinzip arbeitenden Motor, der zumindest einen von einem Abgasstrom beaufschlagten ein- oder mehrstufigen Abgasturbolader mit einer Abgasturbine und einem Ladeluftverdichter, die auf einer gemeinsamen Welle angeordnet bzw. über diese verbunden sind, aufweist, mit zumindest einem Abgaskrümmer, der den Abgasstrom von Auslassventilen des Motors zum Abgasturbolader leitet, und mit einer zwischen den Auslassventilen und dem Abgasturbolader angeordneten Drosselvorrichtung, die zur Motorbremsung derart betätigt wird, dass der Abgasstrom gedrosselt und so stromauf der Drosselvorrichtung ein Druckanstieg im Abgas erzeugt wird. Unter "stromauf" wird hierbei eine Strömungsrichtung des Abgases verstanden, die entgegengesetzt zur Strömungsrichtung des Abgases ist, wenn dieses den Motor über seine Auslassventile verlässt und in Richtung Drosselvorrichtung bzw. Abgasturbolader strömt.

### Stand der Technik

Als Motorbremsvorrichtung sei hier zum Beispiel jene der EP 0736672 B1 in Verbindung mit einem hierdurch geschützten Verfahren zur Motorbremsung genannt. Bei diesem Verfahren wird die Motorbremsung derart vollzogen, dass die Abgasströmung gedrosselt und so stromauf der Drosselvorrichtung ein Druckanstieg im Abgas erzeugt wird, das nach einem Zwischenöffnen eines Auslassventils in den Verbrennungsraum rückströmt und während des anschließenden Kompressionstaktes bei weiterhin teiloffengehaltenem Auslassventil für die Motorbremsung sorgt. Beim Motorbremsen wird hierbei in ein Zwischenöffnen des Auslassventils, das bei in Drosselstellung befindlicher durch den im Abgas hervorgerufenen Druckanstieg bewirkt wird, steuerungstechnisch eingegriffen, in dem das nach Zwischenöffnung zum Schließen neigende Auslassventil zwangsweise durch eine nockenwellenfern in den Auslassventilbetätigungsmechanismus eingebaute Steuereinrichtung abgefangen am Schließen gehindert und dann längstens bis zur nockengesteuerten Auslassventilöffnung teilweise offen gehalten wird.

Bei diesem Motorbremsverfahren befinden sich während des Motorbremsbetriebes die im Abgasstrang angeordneten Drosselklappen in einer Drosselstellung, in der der zugehörige Abgasstrang nicht vollständig geschlossen ist, so dass die Drosselklappe durch einen randseitig offen bleibenden schmalen Spalt von einem Teil des aufgestauten Abgases passiert werden kann. Dieser Abgas-Schlupf ist notwendig, um ein Abwürgen des Abgasstromes und ein Überhitzen der Brennkraftmaschine bzw. des Motors zu verhindern.

Obgleich dieses bekannte Motorbremsverfahren hervorragende Bremsleistungen erbringt, ergibt sich für manche Anwendungsfälle der Wunsch nach einer Bremsieistungssteigerung während des Motorbremsbetriebes, um die im Fahrzeug vorhandenen weiteren Bremssysteme wie Retarder und Betriebsbremse stärker zu entlasten oder geringer dimensioniert darstellen zu können.

Ein Verfahren zur Regelung des Ladeluftmassenstroms einer aufgeladenen Brennkraftmaschine ist ferner aus der US 6,155,049 bekannt, bei der die Druckwerte des Ladedrucks und des Abgasgegendrucks gemessen und gegenübergestellt werden und ein Druckgefälle als Regelgröße für den Ladeluftmassenstrom herangezogen wird. Diese Druckgefälleregelung kann in Verbindung mit einer variablen Turbinengeometrie ferner zur Abbremsung der Brennkraftmaschine eingesetzt werden. Ein vom Prinzip her ähnlicher Aufbau ist ferner auch aus der EP 0 831 216 A2 bekannt.

Ausgehend hiervon besteht die Aufgabe der vorliegenden Erfindung darin, ein Verfahren und eine Vorrichtung zur Motorbremsung vorzusehen, welche mit geringerem Bauteil- und Kostenaufwand, sowie einer verbesserten Regelung eine gesteigerte Motorbremsleistung erbringen.

Zur Lösung dieser Aufgabe wird die in den Patentansprüchen 1 und 17 angegebene Merkmalskombination vorgeschlagen. Vorteilhafte Ausgestaltungen und Weiterbildungen der Erfindung ergeben sich aus den abhängigen Ansprüchen.

### Offenbarung der Erfindung

Nach Maßgabe der vorliegenden Erfindung ist ein Verfahren zur Motorbremsung einer mehrzylindrigen Brennkraftmaschine bzw. eines mehrzylindrigen Motors eines Fahrzeugs vorgesehen, die bzw. der vorzugsweise nach dem Dieselprinzip arbeitet und zumindest einen einstufigen oder mehrstufigen Abgasturbolader mit einer Abgasturbine und einem Ladeluftverdichter aufweist. Bei Vorhandensein einer Mehrzahl von Abgasturboladern ist vorzugsweise zumindest eine Hochdruckstufe und zumindest eine Niederdruckstufe vorgesehen.

Die Brennkraftmaschine bzw. der Motor weist ferner zumindest einen Abgaskrümmer, der den Abgasstrom von Auslassventilen des Motors dem Abgasturbolader zuführt, und eine zwischen den Auslassventilen und dem Abgasturbolader vorgesehene Drosselvorrichtung auf, welche den Abgasstrom drosselt und so zur Motorbremsung stromauf der Drosselvorrichtung ein Druckanstieg im Abgas erzeugt wird.

Entsprechend dem Verfahren erfolgt des Weiteren eine Messung eines Abgasgegendrucks, sowie eines Ladeluftdrucks. Auf der Grundlage der Messung des Abgasgegendrucks und des Ladeluftdrucks kann eine Stellung der Drosselvorrichtung zum Erzielen einer vorbestimmten Bremsleistung ermittelt werden. Anschließend erfolgt durch Einstellen der Drosselvorrichtung entsprechend der zuvor ermittelten Stellung der Drosselvorrichtung eine Regelung des Abgasgegendrucks sowie des Ladeluftdrucks.

Dies ermöglicht im Gegensatz zu einer Regelung basierend auf nur dem Abgasgegendruck als Regelgröße eine Erzielung eines höheren Abgasgegendrucks über den gesamten Drehzahlbereich des Motors. Der vom Abgasturbolader erzeugte Ladeluftdruck hat einen wesentlichen Einfluss auf den Abgasgegendruck. Die Einbeziehung des Ladeluftdrucks in die Regelung des Abgasgegendrucks ermöglicht daher einen schnelleren Anstieg des Abgasgegendrucks und somit eine verbesserte Motorbremsleistung.

Zur Erzielung einer maximalen Bremsleistung bei einer jeweiligen Motordrehzahl wird gemäß einem weiteren Aspekt der Erfindung zuerst ein maximaler Ladeluftdruck eingeregelt und nach Erreichen des für die Motordrehzahl maximalen Ladeluftdrucks erfolgt eine Regelung des maximalen Abgasgegendrucks. Je nach Motordrehzahl kann somit im Vergleich zu herkömmlichen Regelungen ein größerer Kanalquerschnitt der Drosselvorrichtung freigegeben werden.

Zumindest eine Stellung der Drosselvorrichtung entspricht einem bestimmten Abgasgegendruck. Vorzugsweise erfolgt eine Erkennung oder Regelung einer richtigen Stellung der Drosselvorrichtung durch eine Regeleinrichtung aus einem Vergleich des aktuellen Ladeluftdrucks mit einem Sollladeluftdruck bei dem aktuellen Abgasgegendruck. Die Regeleinrichtung kann beispielsweise ein Motor- oder Fahrzeugsteuergerät sein.

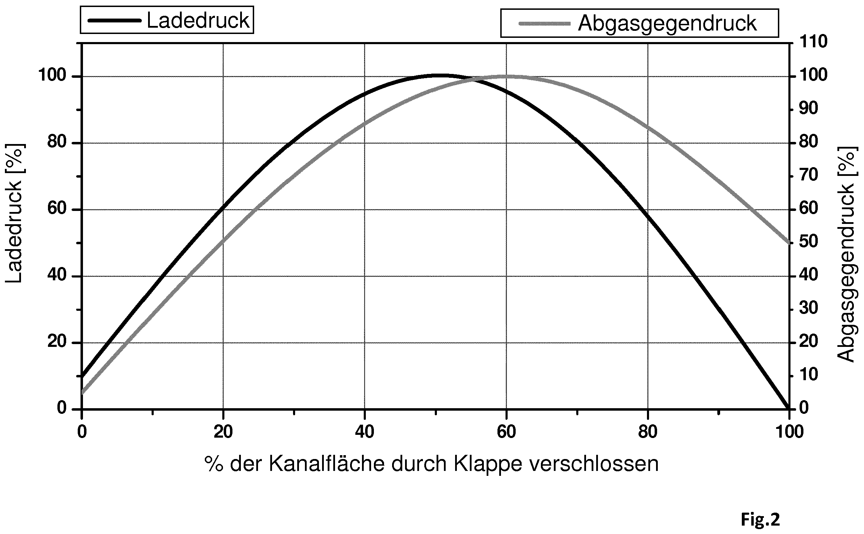

Bezugnehmend auf Fig. 2 ergibt sich somit ein besseres Ansprechverhalten im Motorbremsbetrieb. Ist beispielsweise 90% der Kanalfläche der Drosselvorrichtung verschlossen beträgt der Abgasgegendruck ca. 65% des maximal erreichbaren Wertes. Soll die Motorbremsleistung nun auf null reduziert werden, muss die Drosselvorrichtung geöffnet werden. Wird die Drosselvorrichtung jedoch weiter geöffnet, kommt es zunächst zu einem Anstieg des Abgasgegendrucks aufgrund des durch den erhöhten Gasdurchsatz bedingten höheren Ladeluftdrucks. Der Abgasgegendruck nimmt also erst zu bevor es zu einem Abfall kommen kann, was ein schlechtes Ansprechverhalten der Motorbremse zur Folge hätte. Ein Abgasgegendruck von ca. 65% liegt jedoch ebenfalls bei einer Schließung von nur 30% der Kanalfläche der Drosselvorrichtung an. Entsprechend dem erfindungsgemäßen Verfahren erfolgt daher die Erkennung der richtigen Stellung der Drosselvorrichtung, wodurch ein verbessertes Ansprechverhalten im Motorbremsbetrieb erreicht wird und der Motor durch den höheren Massendurchsatz thermisch entlastet wird.

Gemäß einem weiteren Aspekt der Erfindung ist ein Zusammenhang zwischen Ladeluftdruck, Abgasgegendruck und Bremsleistung für jeweilige Motordrehzahlen mittels Kennfelder in einem Motor- oder Fahrzeugsteuergerät hinterlegt.

Falls der aktuelle Abgasgegendruck geringer ist als ein gewünschter Abgasgegendruck und falls der Ladeluftdruck einem vorbestimmten Wert entspricht, kann die Stellung der Drosselvorrichtung weiter geschlossen werden. Bezugnehmend auf Fig.2 kann der vorbestimmte Wert beispielsweise dadurch gegeben sein, dass der prozentuale Ladeluftdruck größer oder gleich dem prozentualen Abgasgegendruck ist.

Falls der aktuelle Abgasgegendruck geringer ist als ein gewünschter Abgasgegendruck und falls der Ladeluftdruck kleiner als ein vorbestimmter Wert ist, kann die Stellung der DrosselVorrichtung weiter geöffnet werden.

Während des Regelvorgangs wird zur Kontrolle geprüft, ob das Öffnen der Kanalfläche tatsächlich eine Ladedruck-/Abgasgegendrucksteigerung ergibt. Wenn weiteres Öffnen zu einem Ladedruckabfall führt, wird die Drosselvorrichtung wieder leicht geschlossen.

Gemäß einem weiteren Aspekt der vorliegenden Erfindung kann die Regelung des Abgasgegendrucks sowie des Ladeluftdrucks zusätzlich zur Regelung durch die Drosselvorrichtung bzw. Vorrichtung zur Drosselung des Abgasstroms durch eine Einrichtung zur Ladedruckregelung erfolgen, in die wenigstens ein die Abgasturbine umgehendes Waste Gate eingebunden ist.

Die vorliegende Erfindung betrifft des Weiteren eine Vorrichtung zur Motorbremsung einer mehrzylindrigen Brennkraftmaschine bzw. eines mehrzylindrigen Motors eines Fahrzeugs, die bzw. der vorzugsweise nach dem Dieselprinzip arbeitet und zumindest einen einstufigen oder mehrstufigen Abgasturbolader mit einer Abgasturbine und einem Ladeluftverdichter aufweist, sowie zumindest einen Abgaskrümmer, der den Abgasstrom von Auslassventilen des Motors dem Abgasturbolader zuführt, und mit einer zwischen den Auslassventilen und dem Abgasturbolader vorgesehenen Drosselvorrichtung, welche den Abgasstrom drosselt, und so zur Motorbremsung stromauf der Drosselvorrichtung ein Druckanstieg im Abgas erzeugt wird.

Die Vorrichtung zur Motorbremsung weist des Weiteren Mittel zur Messung eines Abgasgegendrucks, sowie eines Ladeluftdrucks auf und es ist eine Steuereinrichtung vorgesehen, welche sich eignet, auf der Grundlage der Messung des Abgasgegendrucks und des Ladeluftdrucks eine Stellung der Drosselvorrichtung zum Erzielen einer vorbestimmten Bremsleistung zu ermitteln. Die Steuereinrichtung ist ferner geeignet, anschließend durch Einstellen der Drosselvorrichtung entsprechend der zuvor ermittelten Stellung der Drosselvorrichtung eine Regelung des Abgasgegendrucks sowie des Ladeluftdrucks durchzuführen.

Gemäß einem weiteren Aspekt der vorliegenden Erfindung erfolgt die Regelung des Abgasgegendrucks sowie des Ladeluftdrucks zusätzlich zur Regelung durch die Drosselvorrichtung bzw. Vorrichtung zur Drosselung des Abgasstroms durch eine Einrichtung zur Ladedruckregelung.

Gemäß einem weiteren Aspekt der vorliegenden Erfindung ist die Einrichtung zur Ladedruckregelung durch wenigstens ein Waste Gate gebildet, welches die Abgasturbine umgeht.

Entsprechend einem weiteren Gedanken der vorliegenden Erfindung ist ein Motor vorgesehen, der je Zylinder wenigstens ein an ein Auslasssystem angeschlossenes Auslassventil aufweist, in welches Auslasssystem eine Drosselvorrichtung eingebaut ist, die zur Motorbremsung so betätigt wird, dass die Abgasströmung gedrosselt und so stromauf der Drosselvorrichtung ein Druckanstieg im Abgas erzeugt wird, das nach einem Zwischenöffnen des Auslassventils in den Verbrennungsraum rückströmt und während des anschließenden Kompressionstaktes bei weiterhin teiloffengehaltenem Auslassventil für eine erhöhte Motorbremsleistung sorgt, wobei beim Motorbremsen in ein Zwischenöffnen des Auslassventils, das bei in Drosselstellung befindlicher Drosselvorrichtung durch den im Abgas hervorgerufenen Druckanstieg bewirkt wird, steuerungstechnisch eingegriffen wird, in dem das nach Zwischenöffnung zum Schließen neigende Auslassventil zwangsweise durch eine nockenwellenfern in den Auslassventilbetätigungsmechanismus eingebaute Steuereinrichtung abgefangen am Schließen gehindert und dann längstens bis zur nockengesteuerten Auslassventilöffnung teilweise offen gehalten wird, wobei der Motor ferner zumindest einen einstufigen oder mehrstufigen Abgasturbolader mit einer Abgasturbine und einem Ladeluftverdichter aufweist, sowie zumindest einen Abgaskrümmer, der den Abgasstrom von Auslassventilen des Motors dem zumindest einem Abgasturbolader zuführt, und mit einer zwischen den Auslassventilen und dem zumindest einen Abgasturbolader vorgesehenen Drosselvorrichtung, welche den Abgasstrom drosselt, und so zur Motorbremsung stromauf der Drosselvorrichtung ein Druckanstieg im Abgas erzeugt wird, eine Messung eines Abgasgegendrucks, sowie eines Ladeluftdrucks durchgeführt wird, wobei auf der Grundlage der Messung des Abgasgegendrucks und des Ladeluftdrucks eine Stellung der Drosselvorrichtung zum Erzielen einer vorbestimmten Bremsleistung ermittelt wird, und durch Einstellen der Drosselvorrichtung entsprechend der zuvor ermittelten Stellung der Drosselvorrichtung eine Regelung des Abgasgegendrucks sowie des Ladeluftdrucks durchgeführt wird.

Gemäß einem weiteren Aspekt der vorliegenden Erfindung wird am Ende des Expansionstaktes, wenn die nockenwellenseitige Steuerung des Auslassventils wieder wirksam wird, die Haltefunktion der vorher als hydraulisch gesperrter Puffer wirkenden Steuereinrichtung aufgehoben und dann die Öffnung des Auslassventils bis zu dessen vollem Hub, dessen Halten und Wiederschließen während des Ausschubtaktes durch den zugehörigen normalen Auslassventilsteuernocken über den Auslassventilbetätigungsmechanismus mit der dann darin nur noch als mechanischer Puffer wirkenden Steuereinrichtung gesteuert.

Gemäß einem anderen Aspekt der vorliegenden Erfindung ist die Steuereinrichtung in einem zylinderkopfseitig gelagerten Kipphebel eingebaut wirksam und weist einen in einer Bohrung des Kipphebels leckagearm axial zwischen zwei mechanisch durch Anschläge begrenzten Endstellungen beweglichen, vorn auf die hintere Stirnfläche des Auslassventilschaftes wirkenden und rückseitig durch eine Druckfeder sowie hydraulisch beaufschlagten Steuerkolben und eine in einen Gewindeabschnitt der selben Kipphebelbohrung eingeschraubte Steuerbuchse auf, in deren nach vorn zum Steuerkolben hin offenem Druckraum die den Steuerkolben beaufschlagende Druckfeder sowie ein nur die Einleitung von Druckmittel aus einem Druckmittelzufuhrkanal zulassendes Rückschlagventil mit einem druckfederbelasteten Schließorgan eingebaut sind. Der Druckmittelzufuhrkanal wird über einen kipphebelinternen Speisekanal mit Druckmittel versorgt, wobei vom Druckraum aus durch die Steuerbuchse zu deren oberem Ende ein Entlastungskanal führt, dessen Austrittsöffnung während eines Bremsvorganges in der Abfang- und Haltephase der Steuervorrichtung zwecks Aufbau und Halten des Druckmitteldruckes im Druckraum und eines damit einhergehenden Ausfahrens und Halten des Steuerkolbens in ausgefahrener Auslassventil-Abfangposition durch einen zylinderdeckelfest angeordneten Anschlag verschlossen gehalten wird.

Gemäß einem weiteren Aspekt der vorliegenden Erfindung wird während eines Bremsvorganges beim abgasgegendruckbedingten Zwischenöffnen des Auslassventils der Steuerkolben aufgrund der im Druckraum wirkenden Kräfte - dem Auslassventilschaft folgend - in seine ausgefahrene Endposition ausgeschoben und es wird damit einhergehend der sich volumenmäßig vergrößernde Druckraum mit Druckmittel aufgefüllt, somit der Steuerkolben anschließend hydraulisch in Auslassventil-Abfangposition verblockt ist und in dieser das sich in Schließrichtung bewegende Auslassventil mit seiner Stirnfläche abfängt und entsprechend offen hält.

Gemäß einem weiteren Aspekt der vorliegenden Erfindung erfolgt die Rückführung des Steuerkolbens aus seiner Auslassventil-Abfangposition in seine eingefahrene Grundstellung am Ende der Haltephase in der Weise, dass bei nockenwellenseitig mit dem normalen Auslassnocken direkt oder indirekt über eine Stößelstange erfolgender Betätigung des Kipphebels durch dessen Wegschwenken vom zylinderdeckelseitigen Anschlag die Austrittsöffnung des steuerbuchseninternen Entlastungskanals am oberen Ende der Steuerbuchse freigegeben wird, somit das im Druckraum befindliche Druckmittel druckentlastet und vom nun nachrückfähigen, nicht mehr mit dem Kipphebel verblockten Steuerkolben volumenentlastet wird, solange, bis dieser seine vollständig eingefahrene Grundstellung eingenommen hat.

Gemäß einem weiteren Aspekt der vorliegenden Erfindung ist - unter Anwendung bei einem Verbrennungsmotor mit untenliegender Nockenwelle, von der aus die Betätigung eines Auslassventils über eine Stößelstange und einen nachfolgenden Kipphebel erfolgt - die Steuereinrichtung im Raum zwischen Stößelstange und Krafteinleitorgan des Kipphebels in einer im bzw. am Zylinderkopf angeordneten Aufnahmehülse wirksam und weist eine in der Aufnahmehülse leckagearm koaxial verschiebbare, unten am oberen Ende der Stößelstange abgestützte Steuerhülse sowie einen in einer Sacklochbohrung der Steuerhülse leckagearm koaxial verschiebbar eingebauten Steuerkolben auf, der oben an einem gelenkig mit dem Krafteinleitorgan des Kipphebels verbundenen Schubübertragungsteil abgestützt und unten von einer in Richtung des letzteren wirkenden Druckfeder beaufschlagt ist, die in dem unterhalb des Steuerkolbens gegebenen Teil der Sacklochbohrung und solchermaßen begrenzten hydraulischen Druckraum eingebaut, der über einen zylinderkopf- bzw. bockinternen Speisekanal sowie einen aufnahmehülseninternen Speisekanal und einen mit diesem kommunizierenden steuerhülseninternen Zufuhrkanal mit Druckmittel, insbesondere Motoröl, versorgt ist, wobei ein in den Druckraum eingebautes Rückschlagventil mit seinem federbelasteten Schließorgan ein Rückströmen von Druckmittel aus dem Druckraum in den Zufuhrkanal verhindert.

Gemäß einem weiteren Aspekt der vorliegenden Erfindung wird während eines Bremsvorganges beim abgasgegendruckbedingten Zwischenöffnen des Auslassventils der Steuerkolben aufgrund der im Druckraum wirkenden Kräfte ausgefahren und dabei der Kipphebel nachgeführt, wobei beim Ausfahren des Steuerkolbens nach einem auf den Aufspringhub des Auslassventils abgestimmten Hubweg die Austrittsöffnung eines steuerkolbeninternen Entlastungskanals durch Austauchen aus der steuerhülsenseitigen Sacklochbohrung freigegeben und über diesen Entlastungskanal das druckrauminterne Druckmittel druckentlastet wird und dass zu Beginn der anschließenden Schließbewegung des Auslassventils über den entsprechend nachgeführten Kipphebel und das Schubübertragungsteil der Steuerkolben wieder in Richtung seiner unausgefahrenen Grundstellung verschoben wird, solange, bis die Austrittsöffnung des Entlastungskanals durch die Wand der Sacklochbohrung wieder verschlossen ist, wodurch der Druckraum wieder abgesperrt, damit die Steuereinrichtung hydraulisch blockiert und das Auslassventil in der entsprechenden Teilöffnungsstellung abgefangen gehalten bleibt.

Gemäß einem weiteren Aspekt der vorliegenden Erfindung erfolgt die Aufhebung der hydraulischen Verblockung des Steuerkolbens in der Steuerhülse und dessen Rückführung aus seiner Auslassventil-Abfangposition in seine unausgefahrene Grundstellung dann, wenn bei nockenwellenseitig mit dem normalen Auslassnocken erfolgender Betätigung der Stößelstange und damit einhergehendem Hub der Steuerhülse nach einem bestimmten, auf den Maximal-Öffnungshub des Auslassventils abgestimmten Hub der Steuerhülse durch deren Austauchen aus der Aufnahmebohrung der Aufnahmehülse der Austrittsquerschnitt einer vom Druckraum quer abgehenden Entlastungsbohrung freigegeben wird, somit das im Druckraum befindliche Druckmittel druckentlastet und vom nun nachrückfahigen Steuerkolben volumenentlastet wird, solange, bis dieser seine vollständig eingefahrene Grundstellung eingenommen hat, welche bei Aufsitzen des Schubübertragungsteiles an der Stirnseite der Steuerhülse gegeben ist.

Gemäß einem weiteren Aspekt der vorliegenden Erfindung wird das Auslassventil nach abgasgegendruckbewirktem Zwischenöffnen in einer Abfangposition gehalten, deren Abstand zur Schließposition etwa 1/5 bis 1/20 des vollen nockenwellengesteuerten Auslassventil-Öffnungshubes beträgt.

Gemäß einem weiteren Aspekt der vorliegenden Erfindung wird die Steuereinrichtung auch als hydraulisches Ventilspielausgleichsorgan herangezogen, wobei ein im Ventilbetätigungsmechanismus auftretendes Spiel durch entsprechende Druckmittelnachfüllung in den Druckraum mit entsprechender Nachführung des Steuerkolbens in Richtung des zu beaufschlagenden Organs ausgeglichen wird.

Es ist im Weiteren selbstverständlich, dass die offenbarten Merkmale der Erfindung zur Erzielung weiterer Vorteile und Ausführungen beliebig miteinander kombiniert werden können.

Weitere Eigenschaften und Vorteile der Erfindung ergeben sich aus der folgenden Beschreibung von Ausführungsformen der Erfindung, unter Bezugsnahme auf die beigefügten Figuren. Die beschriebenen Ausführungsbeispiele bzw. Ausführungsformen sind rein beispielhaft und in keinster Weise beschränkend zu verstehen.

### Kurze Beschreibung der Zeichnungen

Es zeigen:
- Fig.1: ein Ablaufdiagramm eines Beispiels des erfindungsgemäßen Verfahrens zur Motorbremsung;
- Fig.2: ein Diagramm eines Verlaufs von Ladeluftdruck und Abgasgegendruck im Verhältnis zur Stellung der Drosselvorrichtung;
- Fig.3: ein Diagramm eines freien Kanalquerschnitts für eine maximale Bremsleistung in einem vorgegebenen Drehzahlbereich der erfindungsgemäßen Vorrichtung zur Motorbremsung im Vergleich zum Stand der Technik;
- Fig. 4A: ein Diagramm eines Verlaufs eines Luftdurchsatzes in einem vorgegebenen Drehzahlbereich der erfindungsgemäßen Vorrichtung zur Motorbremsung im Vergleich zum Stand der Technik;
- Fig.4B: ein Diagramm eines Verlaufs eines Abgasgegendrucks vor einer Vorrichtung zur Drosselung eines Abgasstroms, sowie vor einer Turbine eines Abgasturboladers entsprechend der vorliegenden Erfindung;
- Fig. 5: ein Diagramm, aus dem der Hubverlauf eines Auslassventils während des Bremsbetriebes bei Anwendung des Bremsverfahrens entsprechend einer weiteren Ausführungsform der Erfindung hervorgeht;
- Fig. 6: ein Diagramm, aus dem der Hubverlauf eines Auslassventils bei einem aus der DE 39 22 884 C2 bekannten Bremsverfahren hervorgeht;
- Fig. 7A-7D: jeweils einen Ausschnitt aus einem Auslassventilbetätigungsmechanismus mit einer weiteren Ausführungsform einer erfindungsgemäßen Steuereinrichtung in einer Betriebsstellung während des erfindungsgemäßen Bremsbetriebes; und
- Fig. 8: ein Funktionsschema der erfindungsgemäßen Vorrichtung zur Drosselung des Abgasstroms mit einer Einrichtung zur Ladedruckregelung.

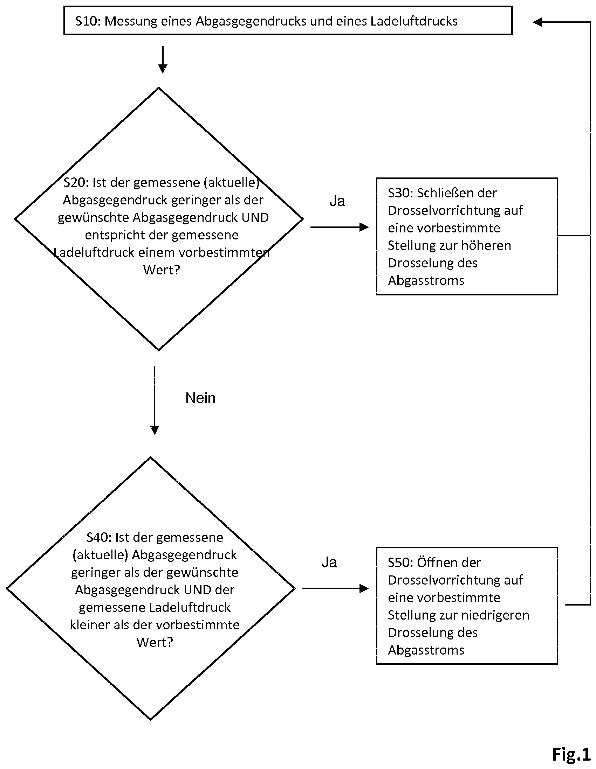

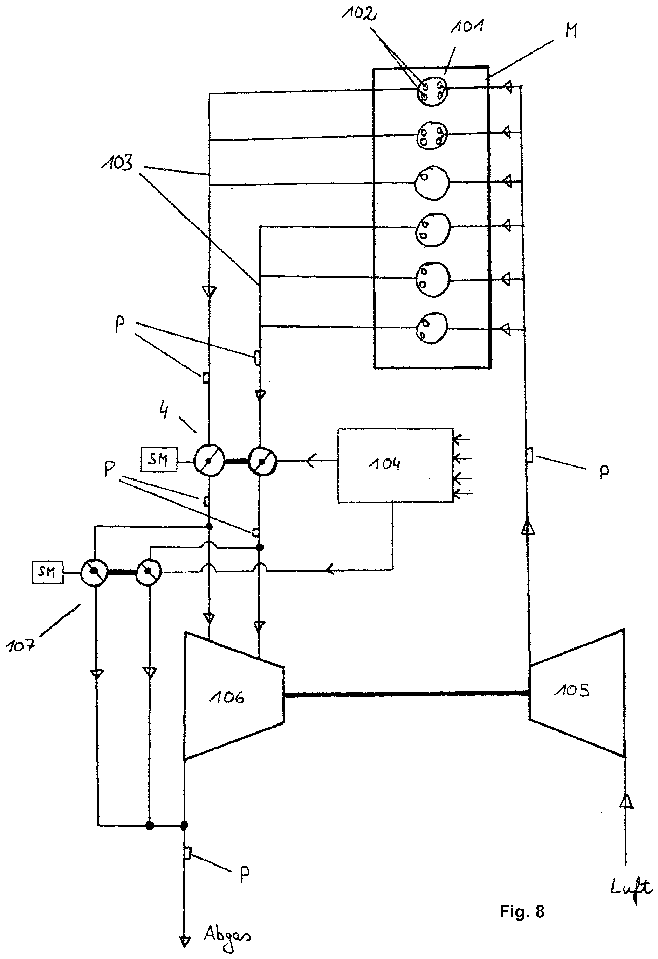

Fig. 1 zeigt ein Ablaufdiagramm eines Beispiels des erfindungsgemäßen Verfahrens zur Motorbremsung. In Schritt S10 erfolgt zunächst eine Messung eines Abgasgegendrucks und eines Ladeluftdrucks. Die Messung des statischen und / oder dynamischen Drucks des Abgases sowie der Ladeluft erfolgt beispielsweise unter Zuhilfenahme von bekannten Drucksensoren P, wie diese in Fig. 8 schematisch dargestellt sind. Der Drucksensor P zur Erfassung bzw. Messung des Ladeluftdrucks ist beispielsweise zwischen dem Ladeluftverdichter 105 und dem Motor M bzw. den Zylindern 101 angeordnet.

Der Drucksensor P zur Erfassung bzw. Messung des Abgasgegendrucks kann zwischen dem Motor M bzw. den Auslassventilen 102 des Motors M und der Abgasturbine 106 angeordnet sein. In diesem Fall kann der Drucksensor P zwischen dem Motor M bzw. den Auslassventilen 102 des Motors M und der Drosselvorrichtung bzw. Vorrichtung 4 zur Drosselung angeordnet sein. Alternativ oder zusätzlich kann der bzw. ein Drucksensor P zwischen der Drosselvorrichtung 4 und der Abgasturbine 106 vor der Bypassleitung zur Einrichtung zur Ladedruckregelung 107 angeordnet sein. Alternativ oder zusätzlich kann der bzw. ein weiterer Drucksensor P stromab, das heißt nach der Abgasturbine und vor einer Abgasnachbehandlung angeordnet sein.

In Schritt S20 wird bestimmt, ob der gemessene, das heißt aktuelle Abgasgegendruck geringer als ein gewünschter Abgasgegendruck ist und der gemessene, das heißt aktuelle Ladeluftdruck einem vorbestimmten Wert entspricht. Bei einer positiven Bestimmung erfolgt in Schritt S30 ein Schließen der Drosselvorrichtung 4 (siehe Fig. 8) in bzw. auf eine vorbestimmte Stellung zur höheren Drosselung des Abgasstroms. Dabei wird die Klappe der Drosselvorrichtung 4 derart bewegt, dass sich der vom Abgas durchströmte Querschnitt vermindert.

Bei einer negativen Feststellung wird in Schritt S40 bestimmt, ob der gemessene, das heißt aktuelle Abgasgegendruck geringer als ein gewünschter Abgasgegendruck ist und der gemessene, das heißt aktuelle Ladeluftdruck kleiner als ein vorbestimmter Wert ist. Bei einer positiven Bestimmung erfolgt in Schritt S50 ein Öffnen der Drosselvorrichtung 4 in bzw. auf eine vorbestimmte Stellung, so dass in Schritt S30 und S50 eine Regelung des Abgasgegendrucks sowie des Ladeluftdrucks durch Einstellen einer Drosselvorrichtung 4 entsprechend einer Bestimmung der optimalen Stellung der Drosselvorrichtung 4 erfolgt.

Die Bestimmung der Stellung der Drosselvorrichtung 4, das heißt der Klappenstellung wird beispielsweise dadurch ermittelt, dass ein Sensor die Stellung der Klappe der Drosselvorrichtung 4 erfasst bzw. misst und beispielsweise an eine zentrale elektronische Steuer- Auswerte- und Regulierungseinrichtung bzw. Steuereinrichtung 104 des Motors M oder des Fahrzeugs, in welchem der Motor M eingebaut ist, rückmeldet (siehe Fig. 8).

Mit einem Positionsgeber kann die Regelung verbessert werden, da dann sofort auf festgelegte (vorbestimmte) Positionen der Klappe vorgesteuert werden kann und nur noch eine Regelung zur exakten Einstellung der gewünschten Bremsleistung notwendig ist.

Gemäß einem weiteren Aspekt der vorliegenden Erfindung kann zusätzlich oder alternativ zu dem voran genannten Beispiel des erfindungsgemäßen Verfahrens die in Fig. 8 gezeigte Bypassleitung B mit integrierter Einrichtung zur Ladedruckregelung 107, welche die Abgasturbine 106 umgeht, zur Einstellung des Ladedrucks herangezogen werden. Dabei wird die in die Bypassleitung B integrierte Einrichtung zur Ladedruckregelung 107, welche vorzugsweise als Waste Gate bzw. Bypassventil ausgeführt ist, ebenfalls von der Steuereinrichtung 104 angesteuert, so dass ein die Abgasturbine 106 umgehender Teil-Abgasstrom entsprechend eingestellt wird, um so wiederum auf das Verhalten der Abgasturbine 106 und den mit ihr verbundenen Ladeluftverdichter 105 entsprechenden Einfluss zu nehmen, um den gewünschten Ladeluftdruck einzustellen.

Fig.2 zeigt beispielhaft ein Diagramm eines Verlaufs von Ladeluftdruck und Abgasgegendruck im Verhältnis bzw. in Abhängigkeit zur Stellung der in Figur 8 gezeigten Drosselvorrichtung 4 bzw. dessen Klappe bei einer maximalen Bremsdrehzahl, das heißt Motordrehzahl im Bremsbetrieb.

Der Ladeluftdruck bzw. Ladedruck beginnt bei völlig offener Drosselvorrichtung (0% der vom Abgas durchströmten Kanalfläche der Drosselvorrichtung sind durch die Klappe der Drosselvorrichtung verschlossen) im Bremsbetrieb auf einem sehr geringen Niveau (ca. 10% des maximalen Ladeluftdrucks) und steigt dann mit Schließen der Drosselvorrichtung auf ein Maximum, das hier bei ca. halboffener Drosselvorrichtung erreicht wird. Bei weiterem Schließen der Drosselvorrichtung fällt der Ladeluftdruck wegen des geringer werdenden Gasdurchsatzes über den Antrieb der Abgasturbine bzw. des damit verbundenen Ladeluftverdichters wieder ab bis er bei vollständig geschlossener Drosselvorrichtung, das heißt in der zweiten Schließstellung der Drosselvorrichtung auf null zurückgeht. Der Abgasgegendruck steigt anfangs in etwa parallel mit dem Ladeluftdruck und erreicht sein Maximum bei einer etwas weiter geschlossenen Klappenstellung der Drosselvorrichtung als der Ladeluftdruck und fällt dann auf einen Wert von ca. 50% bei vollständig geschlossener Drosselvorrichtung, was dem von dem Motor erzeugten Abgasgegendruck ohne die Zufuhr zusätzlicher komprimierter Luft durch den Verdichter entspricht, da bei vollständig geschlossener Drosselvorrichtung das Turbinenrad des Abgasturboladers nicht mit einem Luftstrom beaufschlagt wird und der Ladeluftverdichter somit keinen Ladeluftdruck erzeugt.

Für einen bestimmten gewünschten Abgasgegendruck bei einer Bremsteillast gibt es meist zwei zugehörige mögliche Stellungen der Drosselvorrichtung. Die günstigere Stellung ist dabei immer die Stellung mit dem höheren Ladedruck. Ein Sensor bzw. Regler mit integriertem Sensor erkennt die richtige Stellung der Drosselvorrichtung beispielsweise auch aus einem Vergleich des aktuellen Ladedrucks mit einem Sollladedruck aus einem Kennfeld und kann so stets in Richtung der Stellung der Drosselvorrichtung für den Abgasgegendruck mit dem höheren Ladeluftdruck regeln. Der Regler überprüft immer, ob das Öffnen der Drosselvorrichtung zu einer Ladedrucksteigerung führt. Wird ein Maximum überschritten, so wird die Drosselvorrichtung wieder geschlossen.

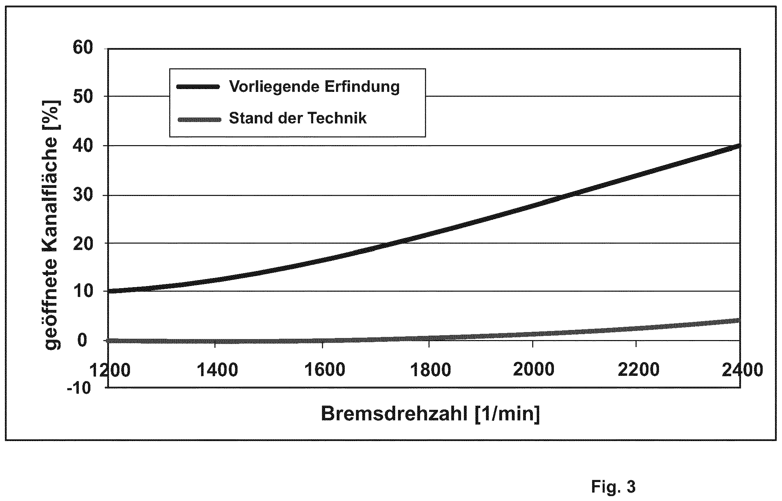

Fig.3 zeigt beispielhaft ein Diagramm eines freien Kanalquerschnitts der Drosselvorrichtung für eine maximale Bremsleistung in einem vorgegebenen Drehzahlbereich der erfindungsgemäßen Vorrichtung zur Motorbremsung im Vergleich zum Stand der Technik. Bei einem konventionellen Motorbremssystem ohne Turboladerunterstützung wird eine Vorrichtung zur Motorbremsung wie beispielsweise eine Bremsklappe im Verlauf des Drehzahlbereichs eines Motors nur sehr wenig geöffnet. Der durch die Vorrichtung zur Motorbremsung erzeugte Abgasgegendruck resultiert somit nur aus dem von dem Motor erzeugten Abgasgegendruck.

Entsprechend dem erfindungsgemäßen Verfahren zur Motorbremsung kann die Vorrichtung zur Motorbremsung jedoch beträchtlich weiter geöffnet werden. Bei einer Motordrehzahl von 1200 Umdrehungen pro Minute ist ca. 10% des Kanalquerschnitts des Abgassystems geöffnet und bei einer Motordrehzahl von 2400 Umdrehungen pro Minute ist ca. 40% des Kanalquerschnitts des Abgassystems geöffnet. Diese Angaben können natürlich je nach Turboladerauslegung, das heißt je nach der Dimensionierung der Abgasturbine und des Ladeluftverdichters variieren.

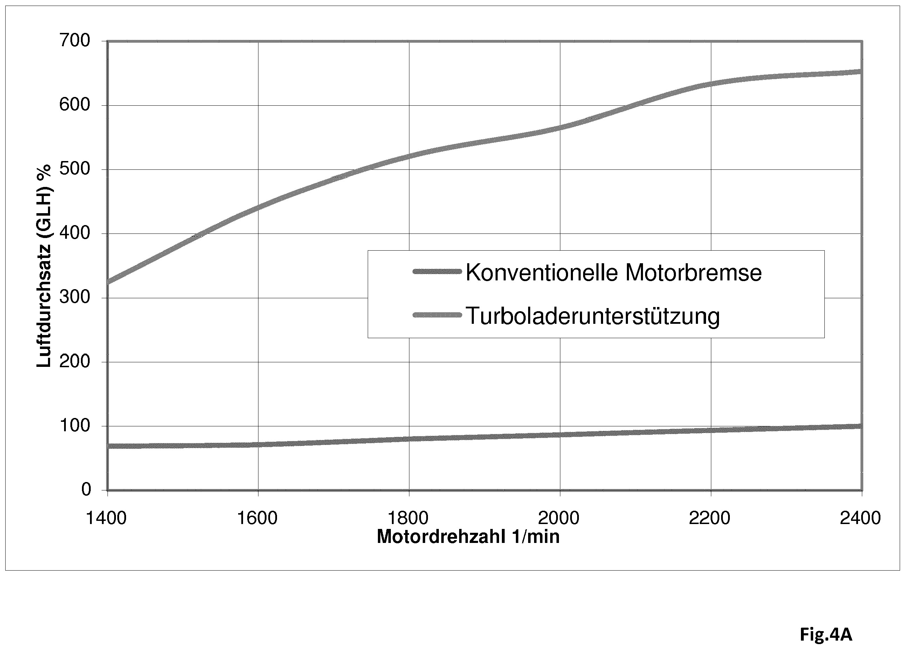

Fig.4A zeigt beispielhaft ein Diagramm eines Verlaufs eines Luftdurchsatzes in einem vorgegebenen Drehzahlbereich der erfindungsgemäßen Vorrichtung zur Motorbremsung im Vergleich zum Stand der Technik. Bei einem konventionellen Motorbremssystem ohne Turboladerunterstützung entspricht der Luftdurchsatz lediglich dem von dem Motor erzeugten Luftdurchsatz. Dieser beträgt bei einer Motordrehzahl von 1400 Umdrehungen pro Minute ca. 70% und bei einer maximalen Motordrehzahl von 2400 Umdrehungen pro Minute 100%. Entsprechend dem erfindungsgemäßen Motorbremssystem mit Turboladerunterstützung beträgt der Luftdurchsatz bei 1400 Umdrehungen pro Minute bereits über 300% und steigt bis auf über 600% bei 2400 Umdrehungen pro Minute an, das heißt der Anteil der Luftdurchsatzes durch die Turboladerunterstützung am Gesamtluftdurchsatz beträgt bei 1400 Umdrehungen pro Minute bereits dem dreifachen Wert des Luftdurchsatzes, welcher durch den Motor ohne Turboladerunterstützung erzeugt wird.

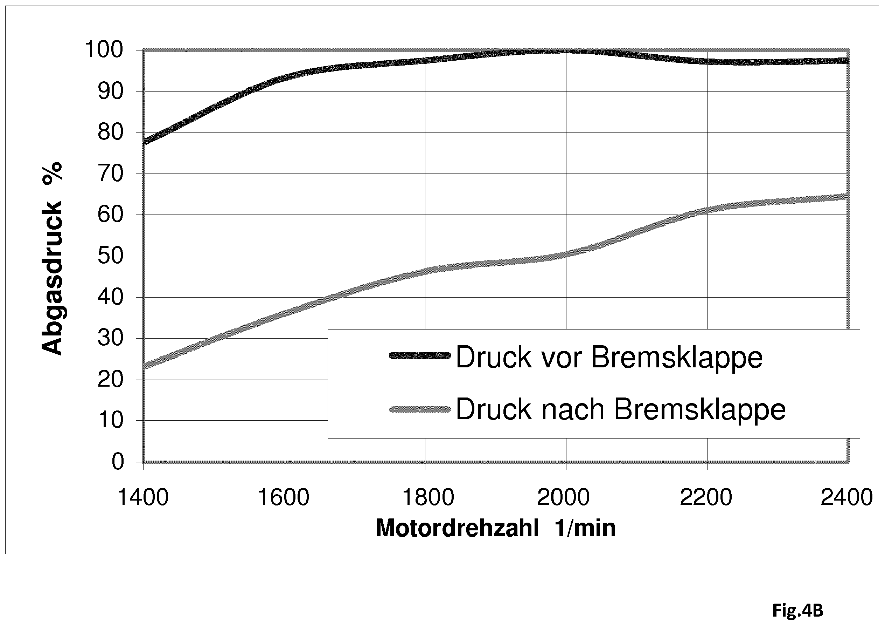

Fig. 4B zeigt beispielhaft ein Diagramm eines Verlaufs eines Abgasgegendrucks vor einer Vorrichtung zur Drosselung eines Abgasstroms, sowie vor einer Turbine eines Abgasturboladers entsprechend der vorliegenden Erfindung. Der Abgasgegendruck vor der Vorrichtung zur Motorbremsung beträgt bei einer Motordrehzahl von 1400 Umdrehungen pro Minute über 75% und steigt dann bis 100% bei einer Motordrehzahl von ca. 2000 Umdrehungen pro Minute an. Anschließend fällt der Abgasgegendruck bis zur maximalen Motordrehzahl von 2400 Umdrehungen pro Minute geringfügig ab. Der Abgasgegendruck nach der Vorrichtung zur Motorbremsung bzw. vor der Turbine des Abgasturboladers beträgt bei einer Motordrehzahl von 1400 Umdrehungen pro Minute ca. 25% und steigt bis zu einer maximalen Motordrehzahl von 2400 Umdrehungen pro Minute aufgrund des erhöhten Luftdurchsatzes durch die Turboladerunterstützung auf ca. 65% an.

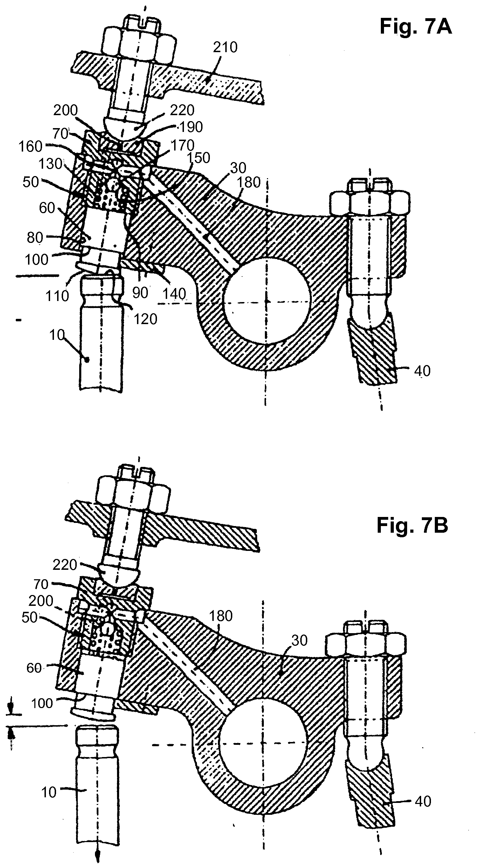

In den Fig. 7A - 7D und 7A - 7D sind gleiche bzw. einander entsprechende Teile mit gleichen Bezugszeichen gekennzeichnet.

Von dem dazugehörigen 4-Takt-Hubkolbenverbrennungsmotor ist in diesen Figuren nur der Schaft eines Auslassventils 10 und des zugehörigen Ventilbetätigungsmechanismus zu sehen, soweit er für das Verständnis der Erfindung erforderlich ist.

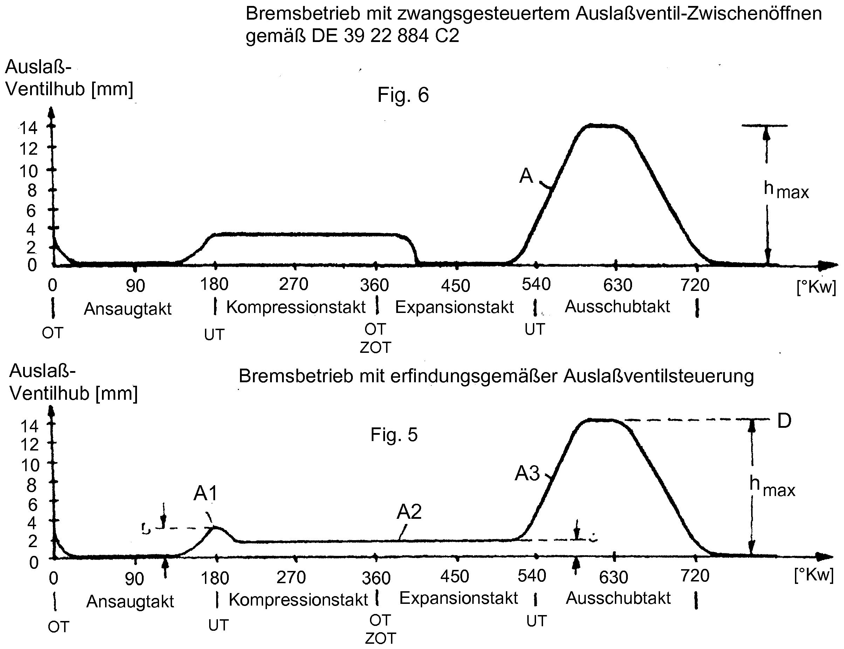

Grundsätzlich weist dieser 4-Takt-Hubkolbenverbrennungsmotor je Zylinder wenigstens ein an ein Auslasssystem angeschlossenes Auslassventil auf. Die Auslassventile sind von einer herkömmlichen Nockenwelle aus für Gaswechselvorgänge über entsprechende Ventilbetätigungsmechanismen steuerbar. In Verbindung mit dem Auslassventil gehört hierzu ein im Zylinderkopf 20 gelagerter Kipphebel 30, der, je nach Art der Anordnung der Nockenwelle am Motor, entweder direkt von dieser oder indirekt über eine Stößelstange 40 betätigbar ist. Das im Zylinderkopf 20 mit seinem Schaft geführte Auslassventil 10 ist durch eine nicht dargestellte Schließfeder permanent in Schließrichtung beaufschlagt. In das Auslasssystem ist eine Drosselvorrichtung, zum Beispiel eine Drosselklappe eingebaut, die über eine zugehörige Steuerung zur Motorbremsung so betätigt wird, dass die Abgasströmung gedrosselt und so stromauf der Drosselvorrichtung ein Druckanstieg im Abgas erzeugt wird. Die beim Ausschieben benachbarter Zylinder entstehenden Druckwellen überlagern sich mit dem stationären Gegendruck und bewirken infolge der positiven Druckdifferenz ein Zwischenöffnen des Auslassventils 10 - siehe Phase A1 im Diagramm gemäß Fig. 5. In dieses unabhängig von der Nockenwellensteuerung erfolgende Auslassventil-Zwischenöffnen wird während des Bremsbetriebes erfindungsgemäß steuerungstechnisch eingegriffen, in dem das nach Zwischenöffnung unter der Einwirkung seiner Schließfeder wieder zum Schließen neigende Auslassventil 10 zwangsweise durch eine nockenwellenfern in den Auslassventilbetätigungsmechanismus eingebaute Steuereinrichtung 50 abgefangen und dann mittels dieser über den gesamten Kompressionstakt sowie Expansionstakt in teilgeöffneter Abfangposition gehalten wird - siehe Phase A2 im Diagramm gemäß Fig. 5.

Die Steuereinrichtung 50 kann auf unterschiedliche Art und Weise realisiert und an verschiedenen Stellen des Auslassventilbetätigungsmechanismus eingebaut sein. Beispiele hierfür geben die Fig. 7A - 7D an.

Im Beispiel gemäß Fig. 7A - 7D ist die Steuereinrichtung 50 im Kipphebel 30 wirksam eingebaut und besteht aus zwei Hauptorganen, nämlich einem Steuerkolben 60 und einer Steuerbuchse 70. Der Steuerkolben 60 ist leckagearm in einer Bohrung 80 des Kipphebels 30 axial zwischen zwei durch Anschläge 90, 100 begrenzten Endstellungen beweglich, wirkt vorn über eine gekrümmte Stirnfläche 110 auf die hintere Stirnfläche 120 des Auslassventilschaftes und ist rückseitig sowohl durch eine Druckfeder 130 beaufschlagt als auch hydraulisch druckbeaufschlagbar.

Die Steuerbuchse 70 ist in einem Gewindeabschnitt derselben Bohrung 80 im Kipphebel 30 über dem Steuerkolben 60 eingeschraubt und bildet mit ihrer vorderen Stirnfläche den hinteren Anschlag 90, der die eingefahrene Grundstellung des Steuerkolbens 60 definiert. Die ausgefahrene Endposition des Steuerkolbens 60 wird durch den vorderen Anschlag 100 begrenzt, der durch den hinteren Rand einer umlaufenden Nut am Steuerkolben 60 gebildet ist, in die ein am Kipphebel 30 befestigtes Hubbegrenzungsorgan 140 eingreift.

Die Steuerbuchse 70 weist einen nach vorn zum Steuerkolben 60 hin offenen Druckraum 150 auf, in den die den Steuerkolben 60 beaufschlagende Druckfeder 130 sowie ein nur die Einleitung von Druckmittel aus einem Druckmittelzufuhrkanal 160 zulassendes Rückschlagventil mit seinem druckfederbelasteten Schließorgan 170 eingebaut sind. Der steuerbuchsenintern aus einer Querbohrung und einer davon abgehend zentral in den Druckraum 150 ausmündenden Bohrung bestehende Druckmittelzufuhrkanal 160 wird über einen kipphebelinternen Speisekanal 18 vom Kipphebel-Lagerbereich 190 her mit Druckmittel, hier Schmieröl, bestimmten Druckes versorgt. Außerdem führt vom Druckraum 150 aus durch die Steuerbuchse 70 und ein in dieser fest eingebautes Einsatzstück 190 ein Entlastungskanal 200, dessen einsatzstückseitige Austrittsöffnung während eines Bremsvorganges in der Abfang- und Haltephase (A2) der Steuervorrichtung 50 zwecks Aufbau und Halten des Druckmitteldruckes im Druckraum 15 und eines damit einhergehenden Ausfahrens und Halten des Steuerkolbens 60 in ausgefahrener Auslassventil-Abfangposition durch einen fest am Zylinderdeckel 210 angeordneten Anschlag 220 verschlossen gehalten wird.

Nachfolgend ist anhand der Figurenfolge Fig. 7A - 7B - 7C - 7D auf einen vollständigen Zyklus während des Motorbremsens eingegangen.

Fig. 7A zeigt dabei das Auslassventil 10 anfangs des Ansaugtaktes in Schließstellung A (siehe dazu auch Diagramm in Fig. 5). Die Steuereinrichtung 50 wirkt in dieser Phase innerhalb des Kipphebels 30 als mechanischer Puffer, wobei der Steuerkolben 60 von unten her durch das Auslassventil 10 in eingefahrene Position gedrückt ist und die Steuerbuchse 70 über ihr Einsatzstück 190 am Anschlag 220 abgestützt ist. Ein eventuelles Ventilspiel wird durch teilweises Ausfahren des Steuerkolbens 60 überbrückt.

Fig. 7B zeigt die Verhältnisse in dem Moment, wenn das Auslassventil 10 während des Motorbremsens beim abgasgegendruckbedingten Zwischenöffnen seinen Maximalhub B in Phase A1 (siehe Diagramm Fig. 5) erreicht hat. Bei diesem Zwischenöffnen des Auslassventils 10 hebt dieses vom Steuerkolben 60 ab und dieser wird nun durch die Druckfeder 130 nachgeführt in seine Abfangposition ausgefahren. Dieses geht, weil der Steuerkolben 60 sich von der Steuerbuchse 70 wegbewegt, einher mit einer Vergrößerung des Druckraumes 150 und dessen Auffüllung mit Druckmittel über den Druckmittelzufuhrkanal 160, wobei nach vollständiger Auffüllung des Druckraumes 150, zum einen wegen des sperrenden Rückschlagventils 170 und zum anderen wegen der abgesperrten Austrittsöffnung des Entlastungskanals 200, der Steuerkolben 160 in seiner ausgefahrenen Abfangstellung (vorgegeben durch Anschlag 100) hydraulisch verblockt ist. Dieser Zustand ist aus Fig. 7B ersichtlich. Aus Fig. 7B ist außerdem ersichtlich, dass das Auslassventil 10 beim Zwischenöffnen diesem Steuerkolbenhub mit größerem Hub A - B voreilt.

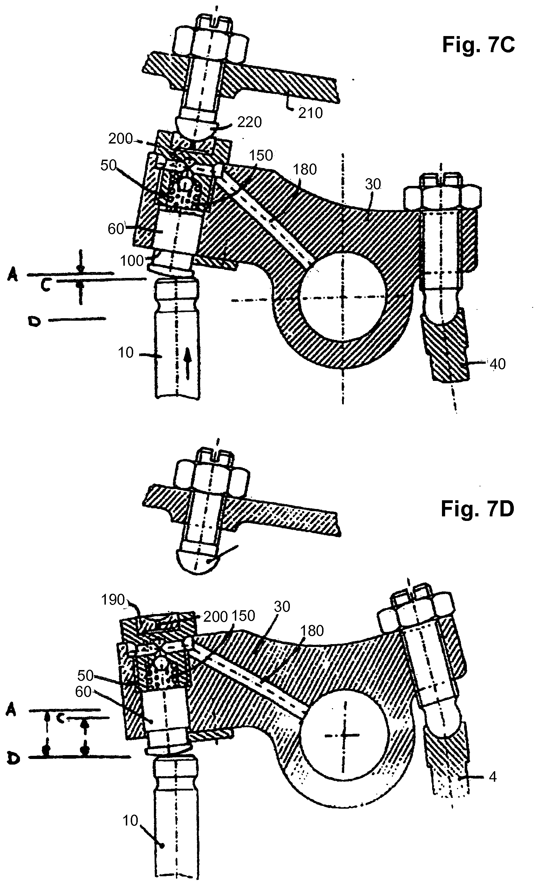

Beim Übergang von Phase A1 nach Phase A2 bewegt sich das Auslassventil 10 wieder in Schließrichtung, wird dann aber schon nach kurzem Weg B - C durch die hydraulisch verblockte Steuereinrichtung 50 abgefangen. Fig. 7C zeigt diese Abfangposition C bei ansonsten gleichen Verhältnissen wie in Fig. 7B, welche Abfangposition C über den gesamten restlichen Kompressionstakt und folgenden Expansionstakt erhalten bleibt.

Erst dann, wenn am Ende des Expansionstaktes die nockenwellenseitige Steuerung des Auslassventils 10 über den zugehörigen Auslassnocken wieder wirksam wird, erfolgt eine Aufhebung dieser vorherigen hydraulischen Verblockung der Steuereinrichtung 50, denn, sobald der Kipphebel 3 in Richtung Auslassventil öffnen bewegt wird, hebt die Steuerbuchse 70 mit ihrem Einsatzstück 190 vom Anschlag 220 ab. Dadurch wird der Entlastungskanal 200 freigegeben und Druckmittel kann aus dem Druckraum 150 der nun nicht mehr verblockten Steuereinrichtung 50 abströmen und zwar unter der Einwirkung des vom Auslassventil 10 in Richtung seiner eingefahrenen Grundposition gedrückten Steuerkolbens 60.

Sobald der Steuerkolben 60 voll eingerückt ist, wirkt die Steuereinrichtung 50 wieder nur als rein mechanischer Puffer am Kipphebel 30, über den dann in Phase A3 (siehe Diagramm gemäß Fig. 5) während des Ausschubtaktes beim Motorbremsen das Öffnen des Auslassventils 10 bis zum vollen Auslassventilhub D - diese Position zeigt Fig. 7D -, dessen Halten und Wiederschließen gesteuert durch den zugehörigen Auslasssteuernocken der Nockenwelle erfolgt.

Am Ende des Ausschubtaktes beim Motorbremsen nimmt der Kipphebel 30 mit der Steuereinrichtung 50 wieder die in Fig. 7A gezeigte Position ein, aus der der nächste Bremszyklus erfolgt.

Fig. 8 zeigt eine Übersicht bzw. ein Funktionsschema eines Beispiels der erfindungsgemäßen Vorrichtung zur Motorbremsung einer mehrzylindrigen Brennkraftmaschine bzw. eines mehrzylindrigen Motors M umfassend eine Drosselvorrichtung 4 sowie eine weitere Einrichtung zur Ladedruckregelung 107.

Der in Fig. 8 dargestellte Motor M arbeitet vorzugsweise nach dem Dieselprinzip und umfasst sechs Zylinder 101. Jeder der Zylinder 101 weist zumindest ein Auslassventil 102 auf. Der Motor M weist ferner einen Abgasturbolader, umfassend einen Ladeluftverdichter 105 und eine Abgasturbine 106, auf. Der Abgasturbolader kann einstufig oder mehrstufig ausgebildet sein.

Der Ladeluftverdichter 105 ist über ein Kanalsystem mit dem Lufteinlassbereich des Motors M bzw. den Zylindern 101 des Motors M verbunden. Der Ladeluftverdichter 105 wird über eine mechanische Verbindung, vorzugsweise über eine Welle, von der Abgasturbine 106 angetrieben. Zwischen dem Lufteinlassbereich bzw. den Zylindern 101 des Motors M und dem Ladeluftverdichter 105 befindet sich zumindest ein Drucksensor P bekannter Bauart, der den statischen und/oder dynamischen Druck der von dem Ladeluftverdichter 105 angesaugten und anschließend verdichteten Luft ermittelt bzw. misst. Vor dem Ladeluftverdichter 105 kann zusätzlich ein Luftfilter (nicht in Fig. 8 dargestellt) zur Reinigung der Luft von entsprechenden Partikeln bestimmter Art und Größe vorgesehen bzw. angeordnet sein.

An seiner Auslassseite weist der Motor M zumindest einen Abgaskrümmer 103 auf, welcher mit dem zumindest einen Auslassventil 102 jedes Zylinders 101 verbunden ist. Der Abgaskrümmer 103 ist ferner mit der Abgasturbine 106 des Abgasturboladers verbunden. Zwischen dem Motor M bzw. dem Abgaskrümmer 103 und der Abgasturbine 106 weist die Vorrichtung zur Motorbremsung eine Drosselvorrichtung 4 bzw. Vorrichtung 4 zur Drosselung des Abgasstroms auf. Die Drosselvorrichtung 4 umfasst dabei beispielsweise Drosselklappen 4, welche durch ihre Stellung bzw. Position im Gehäuse der Drosselvorrichtung den durchströmten Querschnitt des Abgasstroms und somit den Abgasgegendruck beeinflussen können.

Die beispielsweise in Form von Drosselklappen 4 ausgeführte Vorrichtung 4 zur Drosselung des Abgasstroms wird bezüglich ihrer Position vorzugsweise über eine Stell- bzw. Steuereinrichtung SM, 104 gesteuert, wobei die Drosselklappen 4 mechanisch miteinander verbunden sind. Zwischen der Drosselvorrichtung 4 und dem Motor M bzw. den Auslassventilen 102 der Zylinder 101 kann sich zumindest ein Drucksensor P bekannter Bauart befinden, der den statischen und/oder dynamischen Druck des Abgases erfasst bzw. misst. Zusätzlich oder alternativ dazu kann sich zumindest ein weiterer Drucksensor P stromab der Drosselvorrichtung 4 befinden.

Wie bereits eingangs genannt, weist die erfindungsgemäße Vorrichtung ferner zumindest eine weitere Einrichtung 107 zu Ladedruckregelung auf. Die Einrichtung 107 zur Ladedruckregelung umfasst zumindest eine Bypassleitung, die bezüglich des Abgasstroms die Abgasturbine 106 umgeht. Die zumindest eine Bypassleitung weist ferner zumindest ein Waste Gate bzw. ein Bypassventil auf. Über die zumindest eine Bypassleitung kann bei geöffnetem Bypassventil das Abgas vor der Abgasturbine 106 abgezweigt werden und das Abgas strömt an der Abgasturbine 106 vorbei, beispielsweise in ein Abgasnachbehandlungssystem und/oder Schalldämpfersystem. Das zumindest eine Waste Gate bzw. Bypassventil wird bezüglich seiner Wirkung auf das Abgas bzw. dessen Druck über die Stell- bzw. Steuereinrichtung SM, 104 gesteuert.

Wenn nicht die volle Bremsleistung benötigt wird, wird die vorhandene Einrichtung 107 zur Ladedruckregelung zusätzlich oder alternativ zur Regelung über die Drosselvorrichtung oder die Vorrichtung 4 zur Drosselung des Abgasstroms eingesetzt, da sich dadurch der Ladedruck und damit die Bremsleistung schneller und feinfühliger einstellen lässt. Der Ladeluftverdichter 105 erzeugt einen vorgegebenen Ladedruck im Zylinder 101 des Motors M, wobei der Abgasstrom über das zumindest eine Auslassventil 102 jedes Zylinders 101 über den Abgaskrümmer 103 der Vorrichtung 4 zur Drosselung des Abgasstroms zugeführt wird.

Bei einer bestimmten Motordrehzahl stellt sich zu einer Stellung der Drosselvorrichtung 4 immer ein definierter Ladedruck ein. Wie bereits genannt, sind die Bypass- bzw. Zuführungsleitungen der Einrichtung 107 zur Ladedruckregelung im Abgaskanal zwischen der Vorrichtung 4 zur Drosselung des Abgasstroms und nach dem Ausgang der Abgasturbine 106 angeordnet. Die Einrichtung 107 zur Ladedruckregelung leitet eine vorgegebene Menge des Abgasstroms an der Abgasturbine 106 vorbei, wobei der an der Abgasturbine 106 vorbeigeleitete Abgasstrom nach der Abgasturbine 106 wieder in den Abgaskanal mündet.

Sowohl die Einrichtung 107 zur Ladedruckregelung, als auch die Vorrichtung 4 zur Drosselung des Abgasstroms werden von einer Steuereinrichtung 104 angesteuert. Soll ein Ladedruck, welcher geringer als ein maximaler Ladedruck ist, eingeregelt werden, wird die Einrichtung 107 zur Ladedruckregelung soweit geöffnet, dass sich der gewünschte Ladedruck einstellt. Zur Erzielung der maximalen Bremsleistung wird das Waste Gate bzw. Bypassventil geschlossen, und es wird auf maximalen Ladedruck geregelt.

Entsprechend einer weiteren Ausführungsform der Erfindung kann die Regelung des Abgasgegendrucks sowie des Ladeluftdrucks zusätzlich zur Regelung durch die Vorrichtung 4 zur Drosselung des Abgasstroms durch eine Einrichtung 107 zur Ladedruckregelung erfolgen. Die Einrichtung 107 zur Ladedruckregelung ist vorzugsweise durch ein Waste Gate gebildet.

Die Erfindung wurde anhand von Beispielen näher erläutert, ohne auf die konkrete Ausführungsformen begrenzt zu sein.

## Patentansprüche

1. Verfahren zur Motorbremsung einer mehrzylindrigen Brennkraftmaschine (M) eines Fahrzeugs, die vorzugsweise nach dem Dieselprinzip arbeitet und zumindest einen Abgasturbolader mit einer Abgasturbine (106) und einem Ladeluftverdichter (105) aufweist, sowie einen Abgaskrümmer (103), der den Abgasstrom von Auslassventilen (102) des Motors (M) dem zumindest einen Abgasturbolader zuführt, und mit einer zwischen den Auslassventilen (102) und dem Abgasturbolader vorgesehenen Drosselvorrichtung (4), welche den Abgasstrom drosselt, und so zur Motorbremsung stromauf der Drosselvorrichtung (4) ein Druckanstieg im Abgas erzeugt wird, eine Messung (S10) eines Abgasgegendrucks, sowie eines Ladeluftdrucks durchgeführt wird, wobei auf der Grundlage der Messung des Abgasgegendrucks und des Ladeluftdrucks eine Stellung der Drosselvorrichtung (4) zum Erzielen einer vorbestimmten Bremsleistung ermittelt wird, und durch Einstellen der Drosselvorrichtung (4) entsprechend der zuvor ermittelten Stellung der Drosselvorrichtung (4) eine Regelung des Abgasgegendrucks sowie des Ladeluftdrucks durchgeführt wird **dadurch gekennzeichnet,**
a) **dass** falls der aktuelle Abgasgegendruck geringer als ein gewünschter Abgasgegendruck ist und falls der Ladeluftdruck einem vorbestimmten Wert entspricht (S20), die Stellung der Drosselvorrichtung (4) weiter geschlossen wird (S30),
oder
b) **dass** falls der aktuelle Abgasgegendruck geringer als ein gewünschter Abgasgegendruck ist und der Ladeluftdruck kleiner einem vorbestimmten Wert ist (S40), die Stellung der Drosselvorrichtung (4) weiter geöffnet wird (S50).

2. Verfahren nach Anspruch 1, **dadurch gekennzeichnet, dass** zur Erzielung einer maximalen Bremsleistung bei einer jeweiligen Motordrehzahl zuerst ein maximaler Ladeluftdruck eingeregelt wird und nach Erreichen des für die Motordrehzahl maximalen Ladeluftdrucks eine Regelung des maximalen Abgasgegendrucks erfolgt.

3. Verfahren nach Anspruch 1 oder 2, **dadurch gekennzeichnet, dass** zumindest eine Stellung der Drosselvorrichtung (4) einem bestimmten Abgasgegendruck entspricht.

4. Verfahren nach Anspruch 3, **dadurch gekennzeichnet, dass** eine Erkennung einer richtigen Stellung der Drosselvorrichtung (4) aus einem Vergleich des aktuellen Ladeluftdrucks mit einem Sollladeluftdruck bei dem aktuellen Abgasgegendruck erfolgt.

5. Verfahren nach einem der vorhergehenden Ansprüche, **dadurch gekennzeichnet, dass** ein Zusammenhang zwischen Ladeluftdruck, Abgasgegendruck und Bremsleistung für jeweilige Motordrehzahlen mittels Kennfelder in einem Motor- oder Fahrzeugsteuergerät (104) hinterlegt ist.

6. Verfahren nach einem der vorhergehenden Ansprüche, **dadurch gekennzeichnet, dass** die Regelung des Abgasgegendrucks sowie des Ladeluftdrucks zusätzlich zur Regelung durch die Vorrichtung (4) zur Drosselung des Abgasstroms durch eine Einrichtung (107) zur Ladedruckregelung erfolgt, in die wenigstens ein die Abgasturbine (106) umgehendes Waste Gate eingebunden ist.

7. Verfahren nach einem der vorhergehenden Ansprüche, **dadurch gekennzeichnet, dass** der Motor (M) je Zylinder (101) wenigstens ein an ein Auslasssystem angeschlossenes Auslassventil (10) aufweist, in welches Auslasssystem eine Drosselvorrichtung (4) eingebaut ist, die zur Motorbremsung so betätigt wird, dass die Abgasströmung gedrosselt und so stromauf der Drosselvorrichtung (4) ein Druckanstieg im Abgas erzeugt wird, das nach einem Zwischenöffnen des Auslassventils (10) in den Verbrennungsraum rückströmt und während des anschließenden Kompressionstaktes bei weiterhin teiloffengehaltenem Auslassventil (10) für eine erhöhte Motorbremsleistung sorgt, wobei beim Motorbremsen in ein Zwischenöffnen des Auslassventils (10), das bei in Drosselstellung befindlicher Drosselvorrichtung durch den im Abgas hervorgerufenen Druckanstieg bewirkt wird, steuerungstechnisch eingegriffen wird, in dem das nach Zwischenöffnung zum Schließen neigende Auslassventil (10, 102) zwangsweise durch eine nockenwellenfern in den Auslassventilbetätigungsmechanismus eingebaute Steuereinrichtung (50) abgefangen am Schließen gehindert und dann längstens bis zur nockengesteuerten Auslassventilöffnung teilweise offen gehalten wird, wobei der Motor ferner zumindest einen Abgasturbolader mit einer Abgasturbine (106) und einem Ladeluftverdichter (105) aufweist, sowie einen Abgaskrümmer (103), der den Abgasstrom von Auslassventilen (10) des Motors (M) dem zumindest einen Abgasturbolader zuführt, und mit einer zwischen den Auslassventilen (10, 102) und dem zumindest einen Abgasturbolader vorgesehenen Drosselvorrichtung (4), welche den Abgasstrom drosselt, und so zur Motorbremsung stromauf der Drosselvorrichtung (4) ein Druckanstieg im Abgas erzeugt wird, eine Messung (S10) eines Abgasgegendrucks, sowie eines Ladeluftdrucks durchgeführt wird, und wobei auf der Grundlage der Messung des Abgasgegendrucks und des Ladeluftdrucks eine Stellung der Drosselvorrichtung (4) zum Erzielen einer vorbestimmten Bremsleistung ermittelt wird, und durch Einstellen der Drosselvorrichtung (4) entsprechend der zuvor ermittelten Stellung der Drosselvorrichtung (4) eine Regelung des Abgasgegendrucks sowie des Ladeluftdrucks durchgeführt wird.

8. Verfahren nach Anspruch 7, **dadurch gekennzeichnet, dass** am Ende des Expansionstaktes, wenn die nockenwellenseitige Steuerung des Auslassventils (10) wieder wirksam wird, die Haltefunktion der vorher als hydraulisch gesperrter Puffer wirkenden Steuereinrichtung (50) aufgehoben und dann die Öffnung des Auslassventils (10) bis zu dessen vollem Hub, dessen Halten und Wiederschließen während des Ausschubtaktes durch den zugehörigen normalen Auslassventilsteuernocken über den Auslassventilbetätigungsmechanismus mit der dann darin nur noch als mechanischer Puffer wirkenden Steuereinrichtung (50) gesteuert wird.

9. Verfahren nach Anspruch 7 oder 8, **dadurch gekennzeichnet, dass** die Steuereinrichtung (50) in einem zylinderkopfseitig gelagerten Kipphebel (30) eingebaut wirksam ist und einen in einer Bohrung (80) des Kipphebels (30) leckagearm axial zwischen zwei mechanisch durch Anschläge (90, 100) begrenzten Endstellungen beweglichen, vorn auf die hintere Stirnfläche (120) des Auslassventilschaftes wirkenden und rückseitig durch eine Druckfeder (130) sowie hydraulisch beaufschlagten Steuerkolben (60) und einer in einen Gewindeabschnitt der selben Kipphebelbohrung (80) eingeschraubten Steuerbuchse (70) aufweist, in deren nach vorn zum Steuerkolben (60) hin offenem Druckraum (150) die den Steuerkolben (60) beaufschlagende Druckfeder (130) sowie ein nur die Einleitung von Druckmittel aus einem Druckmittelzufuhrkanal (160) zulassendes Rückschlagventil mit einem druckfederbelasteten Schließorgan (170) eingebaut sind, welcher Druckmittelzufuhrkanal (16) über einen kipphebelinternen Speisekanal (180) mit Druckmittel versorgt wird, wobei vom Druckraum (150) aus durch die Steuerbuchse (70) zu deren oberem Ende ein Entlastungskanal (200) führt, dessen Austrittsöffnung während eines Bremsvorganges in der Abfang- und Haltephase der Steuervorrichtung (50) zwecks Aufbau und Halten des Druckmitteldruckes im Druckraum (150) und eines damit einhergehenden Ausfahrens und Halten des Steuerkolbens (60) in ausgefahrener Auslassventil-Abfangposition (C) durch einen zylinderdeckelfest angeordneten Anschlag (220) verschlossen gehalten wird.

10. Verfahren nach Anspruch 9, **dadurch gekennzeichnet, dass** während eines Bremsvorganges beim abgasgegendruckbedingten Zwischenöffnen des Auslassventils (10) der Steuerkolben (60) aufgrund der im Druckraum (150) wirkenden Kräfte - dem Auslassventilschaft folgend - in seine ausgefahrene Endposition ausgeschoben und damit einhergehend der sich volumenmäßig vergrößernde Druckraum (150) mit Druckmittel aufgefüllt wird, somit der Steuerkolben (60) anschließend hydraulisch in Auslassventil-Abfangposition (C) verblockt ist und in dieser das sich in Schließrichtung bewegende Auslassventil (10) mit seiner Stirnfläche (110) abfängt und entsprechend offen hält.

11. Verfahren nach Anspruch 10, **dadurch gekennzeichnet, dass** die Rückführung des Steuerkolbens (60) aus seiner Auslassventil-Abfangposition (C) in seine eingefahrene Grundstellung am Ende der Haltephase in der Weise erfolgt, dass bei nockenwellenseitig mit dem normalen Auslassnocken direkt oder indirekt über eine Stößelstange (40) erfolgender Betätigung des Kipphebels (30) durch dessen Wegschwenken vom zylinderdeckelseitigen Anschlag (220) die Austrittsöffnung des steuerbuchseninternen Entlastungskanals (200) am oberen Ende der Steuerbuchse (70) freigegeben wird, somit das im Druckraum (150) befindliche Druckmittel druckentlastet und vom nun nachrückfähigen, nicht mehr mit dem Kipphebel (30) verblockten Steuerkolben (60) volumenentlastet wird, solange, bis dieser seine vollständig eingefahrene Grundstellung eingenommen hat.

12. Verfahren nach einem der Ansprüche 8 und 9, unter Anwendung bei einem Verbrennungsmotor mit untenliegender Nockenwelle, von der aus die Betätigung eines Auslassventils über eine Stößelstange und einen nachfolgenden Kipphebel erfolgt, **dadurch gekennzeichnet, dass** die Steuereinrichtung (50) im Raum zwischen Stößelstange (40) und Krafteinleitorgan (230) des Kipphebels (30) in einer im bzw. am Zylinderkopf (20) angeordneten Aufnahmehülse (240) wirksam ist und einen in der Aufnahmehülse (240) leckagearm koaxial verschiebbaren, unten am oberen Ende der Stößelstange (40) abgestützten Steuerhülse (270) sowie einem in einer Sacklochbohrung (280) der Steuerhülse (270) leckagearm koaxial verschiebbar eingebauten Steuerkolben (290) aufweist, der oben an einem gelenkig mit dem Krafteinleitorgan (230) des Kipphebels (30) verbundenen Schubübertragungsteil (300) abgestützt und unten von einer in Richtung des letzteren wirkenden Druckfeder (310) beaufschlagt ist, die in dem unterhalb des Steuerkolbens (290) gegebenen Teil der Sacklochbohrung (280) und solchermaßen begrenzten hydraulischen Druckraum (320) eingebaut ist, der über einen zylinderkopf- bzw. bockinternen Speisekanal (330) sowie einen aufnahmehülseninternen Speisekanal (340) und einen mit diesem kommunizierenden steuerhülseninternen Zufuhrkanaf (350) mit Druckmittel, insbesondere Motoröl, versorgt ist, wobei ein in den Druckraum (320) eingebautes Rückschlagventil mit seinem federbelasteten Schließorgan (360) ein Rückströmen von Druckmittel aus dem Druckraum (320) in den Zufuhrkanal (350) verhindert.

13. Verfahren nach Anspruch 12, **dadurch gekennzeichnet, dass** während eines Bremsvorganges beim abgasgegendruckbedingten Zwischenöffnen des Auslassventils (10) der Steuerkolben (290) aufgrund der im Druckraum (320) wirkenden Kräfte ausgefahren und dabei der Kipphebel (30) nachgeführt wird, wobei beim Ausfahren des Steuerkolbens (290) nach einem auf den Aufspringhub (A-B) des Auslassventils (10) abgestimmten Hubweg die Austrittsöffnung eines steuerkolbeninternen Entlastungskanals (400) durch Austauchen aus der steuerhülsenseitigen Sacklochbohrung (280) freigegeben und über diesen Entlastungskanal (400) das druckrauminterne Druckmittel druckentlastet wird und dass zu Beginn der anschließenden Schließbewegung des Auslassventils (10) über den entsprechend nachgeführten Kipphebel (30) und das Schubübertragungsteil (300) der Steuerkolben (290) wieder in Richtung seiner unausgefahrenen Grundstellung verschoben wird, solange, bis die Austrittsöffnung des Entlastungskanals (400) durch die Wand der Sacklochbohrung (280) wieder verschlossen ist, wodurch der Druckraum (320) wieder abgesperrt, damit die Steuereinrichtung (50) hydraulisch blockiert und das Auslassventil (10) in der entsprechenden Teilöffnungsstellung (C) abgefangen gehalten bleibt.

14. Verfahren nach den Ansprüchen 12 und 13, **dadurch gekennzeichnet, dass** die Aufhebung der hydraulischen Verblockung des Steuerkolbens (290) in der Steuerhülse (270) und dessen Rückführung aus Auslassventil-Abfangposition (C) in seine unausgefahrene Grundstellung (A) dann erfolgt, wenn bei nockenwellenseitig mit dem normalen Auslassnocken erfolgender Betätigung der Stößelstange (40) und damit einhergehendem Hub der Steuerhülse (270) nach einem bestimmten, auf den Maximal-Öffnungshub (A - D) des Auslassventils (10) abgestimmten Hub der Steuerhülse (270) durch deren Austauchen aus der Aufnahmebohrung (280) der Aufnahmehülse (240) der Austrittsquerschnitt einer vom Druckraum (320) quer abgehenden Entlastungsbohrung (410) freigegeben wird, somit das im Druckraum (320) befindliche Druckmittel druckentlastet und vom nun nachrückfähigen Steuerkolben (290) volumenentlastet wird, solange, bis dieser seine vollständig eingefahrene Grundstellung eingenommen hat, welche bei Aufsitzen des Schubübertragungsteiles (300) an der Stirnseite (420) der Steuerhülse (270) gegeben ist.

15. Verfahren nach einem der Ansprüche 7 bis 14, **dadurch gekennzeichnet, dass** das Auslassventil (10) nach abgasgegendruckbewirktem Zwischenöffnen in einer Abfangposition (C) gehalten wird, deren Abstand zur Schließposition etwa 1/5 bis 1/20 des vollen nockenwellengesteuerten Auslassventil-Öffnungshubes (A-D) beträgt

16. Verfahren nach einem der Ansprüche 7 bis 15, **dadurch gekennzeichnet, dass** die Steuereinrichtung (50) auch als hydraulisches Ventilspielausgleichsorgan herangezogen wird, wobei ein im Ventilbetätigungsmechanismus auftretendes Spiel durch entsprechende Druckmittelnachfüllung in den Druckraum (150 bzw. 320) mit entsprechender Nachführung des Steuerkolbens (60 bzw. 290) in Richtung des zu beaufschlagenden Organs (10 bzw. 300) ausgeglichen wird.

17. Vorrichtung zur Motorbremsung einer mehrzylindrigen Brennkraftmaschine (M) eines Fahrzeugs, die vorzugsweise nach dem Dieselprinzip arbeitet und einen Abgasturbolader mit einer Abgasturbine (106) und einem Ladeluftverdichter (105) aufweist, sowie einen Abgaskrümmer (103), der den Abgasstrom von Auslassventilen (102) des Motors (M) dem Abgasturbolader zuführt, und mit einer zwischen den Auslassventilen (102) und dem Abgasturbolader vorgesehenen Drosselvorrichtung (4) welche den Abgasstrom drosselt, und so zur Motorbremsung stromauf der Drosselvorrichtung (4) ein Druckanstieg im Abgas erzeugt wird, sowie Mittel zur Messung (P) eines Abgasgegendrucks, sowie eines Ladeluftdrucks vorgesehen sind, wobei eine Steuereinrichtung (104) vorgesehen ist, welche eingerichtet ist, auf der Grundlage der Messung des Abgasgegendrucks und des Ladeluftdrucks eine Stellung der Drosselvorrichtung (4) zum Erzielen einer vorbestimmten Bremsleistung zu ermitteln, und wobei die Steuereinrichtung (104) zudem eingerichtet ist, durch Einstellen der Drosselvorrichtung (4) entsprechend der zuvor ermittelten Stellung der Drosselvorrichtung (4) eine Regelung des Abgasgegendrucks sowie des Ladeluftdrucks durchzuführen, **dadurch gekennzeichnet, dass** die Steuereinrichtung (104) weiter so eingerichtet ist,
a) dass falls der aktuelle Abgasgegendruck geringer als ein gewünschter Abgasgegendruck ist und falls der Ladeluftdruck einem vorbestimmten Wert entspricht (S20), die Stellung der Drosselvorrichtung (4) weiter geschlossen wird (S30),
oder
b) dass falls der aktuelle Abgasgegendruck geringer als ein gewünschter Abgasgegendruck ist und der Ladeluftdruck kleiner einem vorbestimmten Wert ist (S40), die Stellung der Drosselvorrichtung (4) weiter geöffnet wird (S50).

## Claims

1. Method for engine braking of a multi-cylinder internal combustion engine (M) of a vehicle, which internal combustion engine (M) preferably operates on the diesel principle and has at least one exhaust-gas turbocharger having an exhaust-gas turbine (106) and having a charge air compressor (105), and having an exhaust manifold (103) which supplies the exhaust-gas flow from outlet valves (102) of the engine (M) to the at least one exhaust-gas turbocharger, and having a throttle device (4) which is provided between the outlet valves (102) and the exhaust-gas turbocharger and which throttles the exhaust-gas flow, and a pressure increase in the exhaust gas is thus generated for engine braking upstream of the throttle device (4), and a measurement (S10) of an exhaust-gas counterpressure and of a charge air pressure is carried out, wherein, on the basis of the measurement of the exhaust-gas counterpressure and of the charge air pressure, a position of the throttle device (4) to obtain a predetermined braking action is determined, and regulation of the exhaust-gas counterpressure and of the charge air pressure is carried out by adjusting the throttle device (4) corresponding to the previously determined position of the throttle device (4), **characterized in**
a) **that**, if the present exhaust-gas counterpressure is lower than a desired exhaust-gas counterpressure and if the charge air pressure corresponds to a predetermined value (S20), the position of the throttle device (4) is closed further (S30),
or
b) **that**, if the present exhaust-gas counterpressure is lower than a desired exhaust-gas counterpressure and the charge air pressure is lower than a predetermined value (S40), the position of the throttle device (4) is opened further (S50).

2. Method according to Claim 1, **characterized in that**, to obtain a maximum braking action at a respective engine rotational speed, firstly a maximum charge air pressure is set and, after the maximum charge air pressure for the engine rotational speed is reached, regulation of the maximum exhaust-gas counterpressure is carried out.

3. Method according to Claim 1 or 2, **characterized in that** at least one position of the throttle device (4) corresponds to a certain exhaust-gas counterpressure.

4. Method according to Claim 3, **characterized in that** a detection of a correct position of the throttle device (4) is carried out from a comparison of the present charge air pressure with a setpoint charge air pressure at the present exhaust-gas counterpressure.

5. Method according to one of the preceding claims, **characterized in that** a relationship between charge air pressure, exhaust-gas counter pressure and braking action for respective engine rotational speeds is stored in an engine or vehicle control unit (104) by means of characteristic maps.

6. Method according to one of the preceding claims, **characterized in that** the regulation of the exhaust-gas counterpressure and of the charge air pressure is carried out, in addition to the regulation by the device (4) for throttling the exhaust-gas flow, by a unit (107) for charge pressure regulation, into which is incorporated a wastegate which bypasses the exhaust-gas turbine (106).

7. Method according to one of the preceding claims, **characterized in that** the engine (M) has, per cylinder (101), at least one outlet valve (10) connected to an outlet system, in which outlet system is installed a throttle device (4) which, for engine braking, is actuated in such a way that the exhaust-gas flow is throttled and a pressure increase in the exhaust gas is thus generated upstream of the throttle device (4), which exhaust gas flows back into the combustion chamber after an intermediate opening of the outlet valve (10) and serves to provide an increased engine braking action during the subsequent compression stroke with the outlet valve (10) still held partially open, wherein during engine braking, an intermediate opening of the outlet valve (10) effected by the pressure increase generated in the exhaust gas when the throttle device is in the throttling position is subjected to a control-based intervention by virtue of the outlet valve (10, 102), which tends toward closing after the intermediate opening, being forcibly prevented from closing, and then being held partially open at the latest until the cam-controlled outlet valve opening, by the interception of a control unit (50) installed remote from the camshaft in the outlet valve actuating mechanism, wherein the engine also has at least one exhaust-gas turbocharger having an exhaust-gas turbine (106) and having a charge air compressor (105), and having an exhaust manifold (103) which supplies the exhaust-gas flow from outlet valves (10) of the engine (M) to the at least one exhaust-gas turbocharger, and having a throttle device (4) which is provided between the outlet valves (10, 102) and the at least one exhaust-gas turbocharger and which throttles the exhaust-gas flow, and a pressure increase in the exhaust gas is thus generated for engine braking upstream of the throttle device (4), and a measurement (S10) of an exhaust-gas counterpressure and of a charge air pressure is carried out, and wherein, on the basis of the measurement of the exhaust-gas counterpressure and of the charge air pressure, a position of the throttle device (4) to obtain a predetermined braking action is determined, and regulation of the exhaust-gas counterpressure and of the charge air pressure is carried out by adjusting the throttle device (4) corresponding to the previously determined position of the throttle device (4).

8. Method according to Claim 7, **characterized in that**, at the end of the expansion stroke, when the control of the outlet valve (10) by the camshaft takes effect again, the holding function of the control unit (50) which previously acted as a hydraulically blocked buffer is eliminated, and then the opening of the outlet valve (10) up to its full stroke, the holding of said outlet valve and the closing of said outlet valve again during the exhaust stroke are controlled by the associated normal outlet valve control cam via the outlet valve actuating mechanism with the control unit (50) which then acts therein only as a mechanical buffer.

9. Method according to Claim 7 or 8, **characterized in that** the control unit (50) is installed and acts in a rocker arm (30) mounted on the cylinder head and is composed of a control piston (60), which is movable with low leakage in a bore (80) of the rocker arm (30) axially between two end positions delimited mechanically by stops (90, 100) and which acts at the front on the rear end surface (120) of the outlet valve shank and which is acted on at the rear side by a compression spring (130) and hydraulically, and a control bush (70) which is screwed into a threaded section of the same rocker arm bore (80) and in whose pressure chamber (150), which is open in the forward direction toward the control piston (60), is installed the compression spring (130) acting on the control piston (60) and a check valve, which check valve permits only the introduction of pressure medium from a pressure medium supply duct (160) and has a compression-spring-loaded closing member (170), which pressure medium supply duct (16) is supplied with pressure medium via a feed duct (180) within the rocker arm, wherein a relief duct (200) leads from the pressure chamber (150) through the control bush (70) to the upper end of the latter, the outlet opening of which relief duct (200) is held closed during a braking process in the interception and holding phase of the control unit (50), for the purpose of building up and holding the pressure medium pressure in the pressure chamber (150) and for an associated deployment and holding of the control piston (60) in the deployed outlet valve interception position (C), by a stop (220) arranged fixed on the cylinder cover.

10. Method according to Claim 9, **characterized in that**, during a braking process, during the exhaust-gas-counterpressure-induced intermediate opening of the outlet valve (10), the control piston (60) is pushed out into its deployed end position on account of the forces acting in the pressure chamber (150) and following the outlet valve shank, and as a result the pressure chamber (150) which becomes larger in volume is filled with pressure medium, and therefore the control piston (60) is subsequently hydraulically blocked in the outlet valve interception position (C) and in said position, by means of the end surface (110) thereof, intercepts and correspondingly holds open the outlet valve (10) which is moving in the closing direction.

11. Method according to Claim 10, **characterized in that** the return of the control piston (60) from its outlet valve interception position (C) into its retracted basic position at the end of the holding phase takes place **in that**, upon the actuation of the rocker arm (30) by the camshaft with the normal outlet cam directly or indirectly via a push rod (40), as a result of the pivoting of said rocker arm (30) away from the cylinder-cover-side stop (220), the outlet opening of the relief duct (200) within the control bush at the upper end of the control bush (70) is opened up, and therefore the pressure medium situated in the pressure chamber (150) is relieved of pressure and is released from the volume of the control piston (60) which can now move back and is no longer blocked by the rocker arm (30), said release taking place until said control piston (60) has assumed its fully retracted basic position.

12. Method according to either of Claims 8 and 9, applied to an internal combustion engine with an underlying camshaft from which the actuation of an outlet valve takes place via a push rod and a subsequent rocker arm, **characterized in that** the control unit (50) acts in the chamber between the push rod (40) and force introduction member (230) of the rocker arm (30) in a holding sleeve (240) arranged in or on the cylinder head (20), and said control unit (50) has a control sleeve (270) coaxially movable with low leakage in the holding sleeve (240) and supported on the upper end of the push rod (40) and has a control piston (290) installed so as to be coaxially movable with low leakage in a blind bore (280) of the control sleeve (270), which control piston (290) is supported at the top on a thrust transmission part (300) articulatedly connected to the force introduction member (230) of the rocker arm (30) and is acted on at the bottom by a compression spring (310) which acts in the direction of said thrust transmission part (300), which compression spring (310) is installed **in that** part of the blind bore (280) provided below the control piston (290) and the hydraulic pressure chamber (320) thus delimited, which pressure chamber (320) is supplied with pressure medium, in particular engine oil, via a feed duct (330) within the cylinder head or block and via a feed duct (340) within the holding sleeve and via a supply duct (350), which communicates with said feed duct within the holding sleeve, within the control sleeve, wherein a check valve installed in the pressure chamber (320) prevents, by means of its spring-loaded closing member (360), a return flow of pressure medium from the pressure chamber (320) into the supply duct (350).

13. Method according to Claim 12, **characterized in that**, during a braking process, during the exhaust-gas-counterpressure-induced intermediate opening of the outlet valve (10), the control piston (290) is deployed on account of the forces acting in the pressure chamber (320), and here, the rocker arm (30) is made to perform a follow-up movement, wherein during the deployment of the control piston (290), after a stroke travel coordinated with the spring-open stroke (A-B) of the outlet valve (10), the outlet opening of a relief duct (400) within the control piston is opened up by emerging from the blind bore (280) in the control sleeve, and the pressure medium within the pressure chamber is relieved of pressure via said relief duct (400), and **in that**, at the start of the subsequent closing movement of the outlet valve (10), the control piston (290) is moved in the direction of its non-deployed basic position again by means of the rocker arm (30) which has performed a corresponding follow-up movement and the thrust transmission part (300) until the outlet opening of the relief duct (400) is closed again by the wall of the blind bore (280), as a result of which the pressure chamber (320) is shut off again, the control unit (50) is therefore hydraulically blocked, and the outlet valve (10) remains held intercepted in the corresponding partially open position (C).

14. Method according to Claims 12 and 13, **characterized in that** the elimination of the hydraulic blocking of the control piston (290) in the control sleeve (270) and the return of said control piston out of the outlet valve interception position (C) into its non-deployed basic position (A) take place when, during actuation of the push rod (40) by the camshaft with the normal outlet cam, and the associated stroke of the control sleeve (270), after a certain stroke, coordinated with the maximum opening stroke (A - D) of the outlet valve (10), of the control sleeve (270), as a result of the emergence thereof from the holding bore (280) of the holding sleeve (240), the outlet cross section of a relief bore (410) extending transversely from the pressure chamber (320) is opened up, the pressure medium situated in the pressure chamber (320) is relieved of pressure and is released from the volume of the control piston (290) which can now move back, said release taking place until said control piston has assumed its fully retracted basic position, attained when the thrust transmission part (300) sets down on the end side (420) of the control sleeve (270).

15. Method according to one of Claims 7 to 14, **characterized in that** the outlet valve (10), after the exhaust-gas-counterpressure-induced intermediate opening, is held in an interception position (C), the distance of which from the closed position amounts to approximately 1/5 to 1/20 of the full camshaft-controlled outlet valve opening stroke (A-D).

16. Method according to one of Claims 7 to 15, **characterized in that** the control unit (50) is also taken into consideration as a hydraulic valve play compensating element, a degree of play occurring in the valve actuating mechanism being compensated by means of corresponding pressure medium replenishment into the pressure chamber (150 or 320) with corresponding follow-up movement of the control piston (60 or 290) in the direction of the member (10 or 300) to be acted on.

17. Device for engine braking of a multi-cylinder internal combustion engine (M) of a vehicle, which internal combustion engine (M) preferably operates on the diesel principle and has an exhaust-gas turbocharger having an exhaust-gas turbine (106) and having a charge air compressor (105), and having an exhaust manifold (103) which supplies the exhaust-gas flow from outlet valves (102) of the engine (M) to the exhaust-gas turbocharger, and having a throttle device (4) which is provided between the outlet valves (102) and the exhaust-gas turbocharger and which throttles the exhaust-gas flow, and a pressure increase in the exhaust gas is thus generated for engine braking upstream of the throttle device (4), and means are provided for measuring (P) an exhaust-gas counterpressure and a charge air pressure, wherein a control unit (104) is provided which is set up for determining, on the basis of the measurement of the exhaust-gas counterpressure and of the charge air pressure, a position of the throttle device (4) to obtain a predetermined braking action, and wherein the control unit (104) is moreover set up for carrying out regulation of the exhaust-gas counterpressure and of the charge air pressure by adjusting the throttle device (4) corresponding to the previously determined position of the throttle device (4), **characterized in that** the control unit (104) is further set up such
a) that, if the present exhaust-gas counterpressure is lower than a desired exhaust-gas counterpressure and if the charge air pressure corresponds to a predetermined value (S20), the position of the throttle device (4) is closed further (S30),
or
b) that, if the present exhaust-gas counterpressure is lower than a desired exhaust-gas counterpressure and the charge air pressure is lower than a predetermined value (S40), the position of the throttle device (4) is opened further (S50).

## Revendications

1. Procédé de freinage moteur d'un moteur à combustion interne (M) à plusieurs cylindres d'un véhicule, lequel moteur fonctionne de préférence selon le cycle diesel et comprend au moins un turbocompresseur à gaz d'échappement doté d'une turbine à gaz d'échappement (106) et d'un compresseur d'air de suralimentation (105), ainsi qu'un collecteur d'échappement (103) qui achemine le flux de gaz d'échappement à partir de soupapes d'échappement (102) du moteur (M) jusqu'audit au moins un turbocompresseur à gaz d'échappement, et un dispositif d'étranglement (4) prévu entre les soupapes d'échappement (102) et le turbocompresseur à gaz d'échappement, lequel dispositif d'étranglement étrangle le flux de gaz d'échappement et, ainsi, une augmentation de pression dans le gaz d'échappement est produite en amont du dispositif d'étranglement (4) pour le freinage moteur, une mesure (S10) d'une contre-pression de gaz d'échappement ainsi que d'une pression d'air de suralimentation est effectuée, une position du dispositif d'étranglement (4) pour obtenir une puissance de freinage prédéfinie étant déterminée sur la base de la mesure de la contre-pression de gaz d'échappement et de la pression d'air de suralimentation, et une régulation de la contre-pression de gaz d'échappement ainsi que de la pression d'air de suralimentation étant effectuée par réglage du dispositif d'étranglement (4) conformément à la position, déterminée préalablement, du dispositif d'étranglement (4), **caractérisé en ce que**
a) dans le cas où la contre-pression de gaz d'échappement effective est inférieure à une contre-pression de gaz d'échappement souhaitée et dans le cas où la pression d'air de suralimentation correspond à une valeur prédéfinie (S20), la position du dispositif d'étranglement (4) est fermée davantage (S30),
ou
b) dans le cas où la contre-pression de gaz d'échappement effective est inférieure à une contre-pression de gaz d'échappement souhaitée et la pression d'air de suralimentation est inférieure à une valeur prédéfinie (S40), la position du dispositif d'étranglement (4) est ouverte davantage (S50).

2. Procédé selon la revendication 1, **caractérisé en ce que**, pour obtenir une puissance de freinage maximale pour un régime de moteur respectif, tout d'abord une pression d'air de suralimentation maximale est réglée et, une fois que la pression d'air de suralimentation maximale pour le régime de moteur est atteinte, une régulation de la contre-pression de gaz d'échappement maximale est effectuée.

3. Procédé selon la revendication 1 ou 2, **caractérisé en ce qu'**au moins une position du dispositif d'étranglement (4) correspond à une contre-pression de gaz d'échappement déterminée.

4. Procédé selon la revendication 3, **caractérisé en ce qu'**une détection d'une position correcte du dispositif d'étranglement (4) est effectuée à partir d'une comparaison de la pression d'air de suralimentation effective avec une pression d'air de suralimentation de consigne pour la contre-pression de gaz d'échappement effective.

5. Procédé selon l'une quelconque des revendications précédentes, **caractérisé en ce qu'**une relation entre la pression d'air de suralimentation, la contre-pression de gaz d'échappement et la puissance de freinage pour des régimes de moteur respectifs est enregistrée, au moyen de cartographies, dans un appareil de commande de moteur ou de véhicule (104).

6. Procédé selon l'une quelconque des revendications précédentes, **caractérisé en ce que** la régulation de la contre-pression de gaz d'échappement ainsi que de la pression d'air de suralimentation s'effectue, en plus de la régulation au moyen du dispositif (4) d'étranglement du flux de gaz d'échappement, au moyen d'un dispositif (107) de régulation de la pression de suralimentation dans lequel est intégrée une soupape de décharge contournant la turbine à gaz d'échappement (106).

7. Procédé selon l'une quelconque des revendications précédentes, **caractérisé en ce que** le moteur (M) comprend, pour chaque cylindre (101), au moins une soupape d'échappement (10) raccordée à un système d'évacuation des gaz d'échappement dans lequel est monté un dispositif d'étranglement (4) qui est actionné pour le freinage moteur de telle sorte que l'écoulement de gaz d'échappement est étranglé et qu'il se produit ainsi en amont du dispositif d'étranglement (4) une augmentation de la pression dans le gaz d'échappement qui revient en arrière dans la chambre de combustion après une ouverture intermédiaire de la soupape d'échappement (10) et pendant le cycle suivant de compression, quand en outre la soupape d'échappement (10) est maintenue partiellement ouverte, fournit une puissance de freinage moteur accrue et, lors du freinage moteur on intervient, par une technique de commande, dans une ouverture intermédiaire de la soupape d'échappement (10), laquelle ouverture intermédiaire est provoquée par l'augmentation de pression provoquée dans le gaz d'échappement quand le dispositif d'étranglement se trouve en position étranglée, par le fait que, de manière forcée et arrêtée au moyen d'un dispositif de commande (50) monté à l'écart de l'arbre à cames dans le mécanisme d'actionnement de soupape d'échappement, la soupape d'échappement (10, 102), qui a tendance à se fermer après l'ouverture intermédiaire, est empêchée d'être fermée et est ensuite maintenue le plus longtemps possible partiellement ouverte jusqu'à l'ouverture, commandée par came, de la soupape d'échappement, le moteur comprenant en outre au moins un turbocompresseur à gaz d'échappement doté d'une turbine à gaz d'échappement (106) et d'un compresseur d'air de suralimentation (105), ainsi qu'un collecteur d'échappement (103) qui achemine le flux de gaz d'échappement à partir de soupapes d'échappement (10) du moteur (M) jusqu'audit au moins un turbocompresseur à gaz d'échappement, et un dispositif d'étranglement (4) prévu entre les soupapes d'échappement (10, 102) et ledit au moins un turbocompresseur à gaz d'échappement, lequel dispositif d'étranglement étrangle le flux de gaz d'échappement et, ainsi, une augmentation de pression dans le gaz d'échappement est produite en amont du dispositif d'étranglement (4) pour le freinage moteur, une mesure (S10) d'une contre-pression de gaz d'échappement ainsi que d'une pression d'air de suralimentation est effectuée, et une position du dispositif d'étranglement (4) pour obtenir une puissance de freinage prédéfinie étant déterminée sur la base de la mesure de la contre-pression de gaz d'échappement et de la pression d'air de suralimentation, et une régulation de la contre-pression de gaz d'échappement ainsi que de la pression d'air de suralimentation étant effectuée par réglage du dispositif d'étranglement (4) conformément à la position, déterminée préalablement, du dispositif d'étranglement (4).

8. Procédé selon la revendication 7, **caractérisé en ce qu'**à la fin du cycle d'expansion, quand la commande, côté arbre à cames, de la soupape d'échappement (10) est à nouveau active, la fonction de maintien du dispositif de commande (50) qui agissait auparavant comme un amortisseur bloqué hydrauliquement est supprimée, et ensuite l'ouverture de la soupape d'échappement (10) est commandée jusqu'à ce qu'elle ait effectué sa course complète, dont le maintien et la fermeture à nouveau pendant le cycle d'échappement sont commandés par la came de commande de soupape d'échappement normale associée, par le biais du mécanisme d'actionnement de soupape d'échappement, le dispositif de commande (50) agissant seulement encore comme un amortisseur mécanique dans celui-ci.

9. Procédé selon la revendication 7 ou 8, **caractérisé en ce que** le dispositif de commande (50) est actif de manière montée dans un culbuteur (30) monté du côté de la culasse et comprend un piston de commande (60) mobile dans un alésage (80) du culbuteur (30), en générant peu de fuites, axialement entre deux positions finales, délimitées mécaniquement par des butées (90, 100), agissant à l'avant sur la surface frontale arrière (120) de la tige de soupape d'échappement et sollicité du côté arrière par un ressort de compression (130) ainsi qu'hydrauliquement, et un manchon de commande (70) vissé dans une partie filetée du même alésage de culbuteur (80), manchon de commande dans la chambre de pression (150), ouverte vers l'avant en direction du piston de commande (60), duquel sont montés le ressort de compression (130) sollicitant le piston de commande (60) ainsi qu'un clapet anti-retour, doté d'un organe de fermeture (170) sollicité par un ressort de compression, ne permettant que l'introduction d'un fluide sous pression provenant d'un canal d'amenée de fluide sous pression (160), lequel canal d'amenée de fluide sous pression (16) est alimenté en fluide sous pression par le biais d'un canal d'alimentation (180) interne au culbuteur, un canal de décharge (200) menant de la chambre de pression (150), à travers le manchon de commande (70), jusqu'à son extrémité supérieure, canal de décharge dont l'ouverture de sortie est maintenue fermée au moyen d'une butée (220) disposée de façon solidaire avec le couvercle du cylindre pendant un processus de freinage lors de la phase de retenue et d'arrêt du dispositif de commande (50) en vue d'établir et de maintenir la pression du fluide sous pression dans la chambre de pression (150) et en vue de la sortie et du maintien du piston de commande (60), qui en découlent, dans la position sortie d'arrêt (C) de soupape d'échappement.

10. Procédé selon la revendication 9, **caractérisé en ce que**, pendant un processus de freinage lors de l'ouverture intermédiaire, due à la contre-pression de gaz d'échappement, de la soupape d'échappement (10), le piston de commande (60) est poussé vers l'extérieur dans sa position finale de sortie en raison des forces qui agissent dans la chambre de pression (150) - en suivant la tige de la soupape d'échappement - et en conséquence la chambre de pression (150) dont le volume augmente est remplie de fluide sous pression, et le piston de commande (60) est ainsi bloqué ensuite hydrauliquement dans la position d'arrêt (C) de soupape d'échappement et, dans cette position, arrête par sa face frontale (110) la soupape d'échappement (10) qui se déplace dans le sens de la fermeture et la maintient ouverte en conséquence.

11. Procédé selon la revendication 10, **caractérisé en ce que** le retour en arrière du piston de commande (60) de sa position d'arrêt de soupape d'échappement (C) à sa position de base rentrée a lieu à la fin de la phase de retenue d'une manière telle que lors de l'actionnement du culbuteur (30), qui a lieu du côté de l'arbre à cames à l'aide de la came normale d'échappement directement ou indirectement au moyen d'une tige de poussoir de soupape (40), par le pivotement du culbuteur à l'écart de la butée (220) située du côté du couvercle du cylindre, l'ouverture de sortie du canal de décharge (200), interne au manchon de commande, est libérée à l'extrémité supérieure du manchon de commande (70), et par conséquent le fluide sous pression, qui se trouve dans la chambre de pression (150), est décomprimé et détendu en volume par le piston de commande (60) qui n'est plus bloqué par le culbuteur (30) et qui est alors susceptible d'avancer jusqu'à ce qu'il ait adopté sa position de base complètement rentrée.

12. Procédé selon l'une des revendications 8 et 9, utilisé dans un moteur à combustion interne comprenant un arbre à cames qui se trouve en bas, à partir duquel a lieu l'actionnement d'une soupape d'échappement au moyen d'une tige de poussoir de soupape et d'un culbuteur qui vient après, **caractérisé en ce que** le dispositif de commande (50) est actif dans l'espace entre la tige de poussoir de soupape (40) et l'organe d'introduction de force (230) du culbuteur (30) dans un manchon de réception (240) disposé dans ou sur la culasse (20), et comprend un manchon de commande (270), pouvant coulisser de façon coaxiale dans le manchon de réception (240), en générant peu de fuites, et s'appuyant en bas sur l'extrémité supérieure de la tige de poussoir de soupape (40) ainsi qu'un piston de commande (290) monté de manière à pouvoir coulisser de façon axiale dans un alésage borgne (280) du manchon de commande (270), en générant peu de fuites, lequel piston de commande s'appuie en haut sur une pièce de transmission (300) de la poussée, reliée de façon articulée à l'organe d'introduction de force (230) du culbuteur (30) et est sollicité en bas par un ressort de compression (310) agissant en direction de cette pièce de transmission de la poussée, ressort de compression qui est monté dans la partie de l'alésage borgne (280) qui est en dessous du piston de commande (290) et dans la chambre de pression (320) hydraulique limitée en conséquence, laquelle chambre de pression est alimentée en fluide sous pression, en particulier en huile pour moteur, au moyen d'un canal d'alimentation (330) interne à la culasse ou au support et d'un canal d'alimentation (340) interne au manchon de réception et d'un canal d'amenée (350) interne au manchon de commande et communiquant avec ce canal d'alimentation, un clapet anti-retour monté dans la chambre de pression (320) empêchant, par son organe de fermeture (360) sollicité par ressort, un écoulement en retour du fluide sous pression de la chambre de pression (320) au canal d'amenée (350).

13. Procédé selon la revendication 12, **caractérisé en ce que**, pendant un processus de freinage lors de l'ouverture intermédiaire, due à la contre-pression de gaz d'échappement, de la soupape d'échappement (10), le piston de commande (290) est sorti en raison des forces agissant dans la chambre de pression (320) et le culbuteur (30) suit ce mouvement, et lors de la sortie du piston de commande (290) après une course qui est adaptée à la course de retour (A-B) de la soupape d'échappement (10), l'ouverture de sortie d'un canal de décharge (400) interne au piston de commande est libérée par la sortie hors de l'alésage borgne (280) situé du côté du manchon de commande et le fluide sous pression à l'intérieur de la chambre de pression est détendu au moyen de ce canal de décharge (400), et **en ce qu'**au début du mouvement suivant de fermeture de la soupape d'échappement (10), au moyen du culbuteur (30) qui accompagne le mouvement en conséquence et de la pièce de transmission de la poussée (300), le piston de commande (290) est poussé à nouveau en direction de sa position de base, non sortie, jusqu'à ce que l'ouverture de sortie du canal de décharge (400) soit à nouveau fermée par la paroi de l'alésage borgne (280), de telle sorte que la chambre de pression (320) soit de nouveau obturée, afin que le dispositif de commande (50) bloque hydrauliquement et que la soupape d'échappement (10) reste maintenue arrêtée dans la position partielle d'ouverture correspondante (C).

14. Procédé selon les revendications 12 et 13, **caractérisé en ce que** la suppression du blocage hydraulique du piston de commande (290) dans le manchon de commande (270) et son retour en arrière, à partir de la position d'arrêt (C) de soupape d'échappement, à sa position de base (A), non sortie, a lieu quand, lors de l'actionnement de la tige de poussoir de soupape (40), qui a lieu du côté de l'arbre à cames à l'aide de la came normale d'échappement, et de la course, qui en découle, du manchon de commande (270) après une course déterminée du manchon de commande (270) adaptée à la course maximale d'ouverture (A-D) de la soupape d'échappement (10) grâce à sa sortie hors de l'alésage de réception (280) du manchon de réception (240), la section transversale de sortie d'un alésage de décharge (410), qui part perpendiculairement de la chambre de pression (320), est libérée, et le fluide sous pression qui se trouve dans la chambre de pression (320) est ainsi décomprimé et détendu en volume par le piston de commande (290) qui est alors susceptible d'avancer jusqu'à ce qu'il ait adopté sa position de base, complètement rentrée, laquelle se produit quand la pièce de transmission de la poussée (300) repose sur la face frontale (420) du manchon de commande (270).

15. Procédé selon l'une des revendications 7 à 14, **caractérisé en ce que** la soupape d'échappement (10) est maintenue, après son ouverture intermédiaire due à la contre-pression de gaz d'échappement, dans une position d'arrêt (C), dont la distance par rapport à la position de fermeture représente environ 1/5ème à 1/20ème de la course complète d'ouverture (A-D) de la soupape d'échappement commandée par l'arbre à cames.

16. Procédé selon l'une des revendications 7 à 15, **caractérisé en ce que** le dispositif de commande (50) est aussi utilisé comme organe hydraulique de compensation du jeu de la soupape, un jeu qui se produit dans le mécanisme d'actionnement de soupape étant compensé par un remplissage correspondant de fluide sous pression dans la chambre de pression (150 ou 320) avec guidage suivant correspondant du piston de commande (60 ou 290) en direction de l'organe à solliciter (10 ou 300).

17. Dispositif de freinage moteur d'un moteur à combustion interne (M) à plusieurs cylindres d'un véhicule, lequel moteur fonctionne de préférence selon le cycle diesel et comprend au moins un turbocompresseur à gaz d'échappement doté d'une turbine à gaz d'échappement (106) et d'un compresseur d'air de suralimentation (105), ainsi qu'un collecteur d'échappement (103) qui achemine le flux de gaz d'échappement à partir de soupapes d'échappement (102) du moteur (M) jusqu'au turbocompresseur à gaz d'échappement, et un dispositif d'étranglement (4) prévu entre les soupapes d'échappement (102) et le turbocompresseur à gaz d'échappement, lequel dispositif d'étranglement étrangle le flux de gaz d'échappement et, ainsi, une augmentation de pression dans le gaz d'échappement est produite en amont du dispositif d'étranglement (4) pour le freinage moteur, des moyens de mesure (P) d'une contre-pression de gaz d'échappement ainsi que d'une pression d'air de suralimentation étant prévus, un dispositif de commande (104) étant prévu, lequel est conçu pour, sur la base de la mesure de la contre-pression de gaz d'échappement et de la pression d'air de suralimentation, déterminer une position du dispositif d'étranglement (4) pour obtenir une puissance de freinage prédéfinie, et le dispositif de commande (104) étant en outre conçu pour, par réglage du dispositif d'étranglement (4) conformément à la position, déterminée préalablement, du dispositif d'étranglement (4), effectuer une régulation de la contre-pression de gaz d'échappement ainsi que de la pression d'air de suralimentation, **caractérisé en ce que** le dispositif de commande (104) est en outre conçu de telle sorte que
a) dans le cas où la contre-pression de gaz d'échappement effective est inférieure à une contre-pression de gaz d'échappement souhaitée et dans le cas où la pression d'air de suralimentation correspond à une valeur prédéfinie (S20), la position du dispositif d'étranglement (4) est fermée davantage (S30),
ou
b) dans le cas où la contre-pression de gaz d'échappement effective est inférieure à une contre-pression de gaz d'échappement souhaitée et la pression d'air de suralimentation est inférieure à une valeur prédéfinie (S40), la position du dispositif d'étranglement (4) est ouverte davantage (S50).
